Europäisches Patentamt

European Patent Office

Office européen des brevets

(19)

(11) **EP 1 624 457 A1**

(12) **EUROPEAN PATENT APPLICATION**
published in accordance with Art. 158(3) EPC

(43) Date of publication:
08.02.2006 Bulletin 2006/06

(51) Int Cl.:
*G11B 27/00* (1968.09)   *G11B 20/12* (1985.01)
*H04N 5/91* (1980.01)

(21) Application number: 04730661.8

(22) Date of filing: 30.04.2004

(86) International application number:
PCT/JP2004/006290

(87) International publication number:
WO 2004/100161 (18.11.2004 Gazette 2004/47)

(84) Designated Contracting States:
DE FR GB

(30) Priority: 07.05.2003 JP 2003128743

(71) Applicant: MATSUSHITA ELECTRIC INDUSTRIAL
CO., LTD.
Kadoma-shi, Osaka 571-8501 (JP)

(72) Inventors:
• MITA, Hideaki
Hyogo 658-0032 (JP)

• SAITO, Hiroshi
Osaka 591-8025 (JP)

(74) Representative: Eisenführ, Günther
Eisenführ, Speiser & Partner
Patentanwälte Rechtsanwälte
Postfach 10 60 78
28060 Bremen (DE)

(54) **RECORDING/REPRODUCTION DEVICE AND RECORDING/REPRODUCTION METHOD**

(57) According to the embodiment, there is provided a recording apparatus which time-divides a stream of continuous video or audio signals into a first stream and a second stream, records the first stream on a first recording medium as a first file, and records the second stream on a second recording medium as a second file. First management information related to a manufacture code number, being unique to a medium, for specifying the second recording medium is recorded on the first recording medium in association with the first file, or second management information related to a manufacture code number, being unique to a medium, for specifying the first recording medium is recorded on the second recording medium in association with the second file.

Fig.1

EP 1 624 457 A1

**Description**

TECHNICAL FIELD

The present invention relates to a recording/reproducing apparatus for video data and audio data over a plurality of recording media.

BACKGROUND ART

In recent years, an apparatus which files and records a video signal on a recording medium such as an optical disk or a semiconductor memory becomes popular. With an increase in capacity of a recording medium, recording time is also elongated. However, since the capacity of a single recording medium is limited, a method of continuously recording video signals on a plurality of recording media to elongate recording time is proposed.

As a conventional method of continuously recording signals on a plurality of recording media, a method of continuously recording video signals on a plurality of optical disks without interruption is known (for example, see Japanese Patent No. 2910697 (FIG. 1)).

In the conventional technique, sub-disks are arranged in an optical disk recording apparatus to make it possible to continue recording even during replacement of main disks. The main disks are sequentially replaced with each other to realize long-time recording. Furthermore, even in movement of an optical pickup between a main disk and a sub-disk, recording data such as video/audio signals of TV broadcast continuously input are recorded by a buffer memory without any loss.

The recording method employs a configuration in which picture recording start addresses and picture recording end addresses of a plurality of main disks and a plurality of sub-disks are stored in an information memory of a recording apparatus in picture recording to sequentially reproduce data according to the content in the information memory in reproducing. For this reason, it is difficult that only the plurality of recording media on which the data are continuously recorded is extracted to continuously reproduce the data by another apparatus.

SUMMARY OF THE INVENTION

It is an object of the present invention that, when a stream of continuous video or audio signals is continuously recorded over a plurality of recording media, only the plurality of recording media on which the stream is continuously recorded is extracted to make it possible to continuously reproduce the stream by another apparatus.

The above problem is solved by the following present invention. More specifically, a recording apparatus according to the present invention which time-divides a stream of continuous video or audio signals into a first stream and a second stream, records the first stream on a first recording media as a first file, and records the second stream on a second recording medium as a second file,

wherein first management information related to a manufacture code number, being unique to a medium, for specifying the second recording medium is recorded on the first recording medium in association with the first file; or

second management information related to a manufacture code number, being unique to a media, for specifying the first recording medium is recorded on the second recording medium in association with the second file.

With this configuration, when a stream of continuous video or audio signals is recorded over a plurality of recording media, even though the plurality of recording media is reproduced by another apparatus, the context of each video file is clarified with reference to the first or second management information to make it possible to perform continuous reproduction using the plurality of recording media. Furthermore, since the video files of the respective recording media are independent of each other, a single recording medium can be reproduced.

In the recording apparatus according to the present invention, even though a stream of continuous video or audio signals is continuously recorded over a plurality of recording media, management information files associated with video files or audio files on the recording media are independently recorded on the recording media, respectively. Therefore, even though only one recording medium is extracted, the file on the recording medium can be reproduced as a clip. Since information of clips previous to and next to each clip is recorded as management information in a management information file of each recording medium, continuous clips from the plurality of recording media are coupled to each other to make it easily possible to continuously reproduce the continuous clips.

When recording of video signals of the respective recording media is completed, the information of video files previous to and next to a video file corresponding to the video signals is fixed, and recording of a management information file can also be completed. Therefore, when the recording of the video file is completed, the recording medium can be disconnected, and the recorded media are sequentially replaced with new media to make it possible to perform a continuous recording operation without time restriction.

BRIEF DESCRIPTION OF THE DRAWINGS

These and other objects, features and advantages of the present invention will become apparent upon consideration of the following detailed description of the invention when read in conjunction with the drawing figures in which:

FIG. 1 is a diagram showing the configuration of a video recording apparatus according to Embodiment 1 of the present invention;

FIG. 2 is a diagram showing configurations of a video file and an audio file to be recorded in Embodiment 1 of the present invention;

FIG. 3 is a diagram showing a relationship between video frames and the number of audio samples in Embodiment 1 of the present invention;

FIG. 4 is a diagram showing a relationship between clips constituted by Index files and video and audio files in Embodiment 1 of the present invention;

FIG. 5 is a diagram showing a structure of an Index file in Embodiment 1 of the present invention;

FIG. 6 is a diagram showing elements of Index files in Embodiment 1 of the present invention;

FIG. 7 is a diagram showing contents of recording memories in Embodiment 1 of the present invention;

FIG. 8 is a diagram showing a configuration of the contents of recording memories and video and audio files in Embodiment 1 of the present invention;

FIG. 9 is a diagram showing the content of recording memories obtained after a recording operation in Embodiment 1 of the present invention;

FIG. 10 is a diagram showing the content of Index files obtained after a recording operation in Embodiment 1 of the present invention;

FIG. 11 is a diagram showing a change in file size in Embodiment 2 of the present invention;

FIG. 12 is a diagram showing a configuration of the contents of recording memories and video and audio files in Embodiment 2 of the present invention;

FIG. 13 is a flow chart of a recording method according to Embodiment 1 of the present invention;

FIG. 14 is a flow chart of another example of the recording method according to Embodiment 1 of the present invention;

FIG. 15 is a flow chart of still another example of the recording method according to Embodiment 1 of the present invention;

FIG. 16 is a flow chart of still another example of the recording method according to Embodiment 1 of the present invention;

FIG. 17 is a flow chart related to a decision of recording destination media according to Embodiment 2 of the present invention;

FIG. 18 is a block diagram showing a configuration of a video recording apparatus according to Embodiment 3 of the present invention;

FIG. 19 is a flow chart of a recording method according to Embodiment 3 of the present invention;

FIG. 20 is a flow chart of another example of the recording method according to Embodiment 3 of the present invention;

FIG. 21 is a flow chart of still another example of the recording method according to Embodiment 3 of the present invention;

FIG. 22 is a flow chart of still another example of the recording method according to Embodiment 3 of the present invention;

FIG. 23 is a diagram showing the contents of recording memories in Embodiment 5 of the present invention;

FIG. 24 is a diagram showing the contents of Index files in Embodiment 5 of the present invention;

FIG. 25A is a diagram showing an example of a display of a material obtained by a display unit in Embodiment 4 of the present invention, and FIG. 25B is a diagram showing an example of the input unit;

FIG. 26 is a flow chart of a reproducing method according to Embodiment 4 of the present invention;

FIG. 27 is a detailed flow chart of management information read/analysis steps in FIG. 26;

FIG. 28 is a diagram showing the contents of recording memories in Embodiment 6 of the present invention;

FIG. 29 is a diagram showing the contents of Index files in Embodiment 6 of the present invention; and

FIG. 30A is an example of a display of a material obtained by a display unit in Embodiment 6 of the present invention, FIGS. 30B and 30D are diagrams showing an example of an input unit, and FIG. 30C is an example of a display obtained when a material 2 is designated to be reproduced in FIG. 30A.

DESCRIPTION OF THE PREFERRED EMBODIMENTS

Embodiments of the present invention will be described below with reference to the accompanying drawings. The same reference numerals as in the drawings substantially denote the same parts in the drawings.

(Embodiment 1)

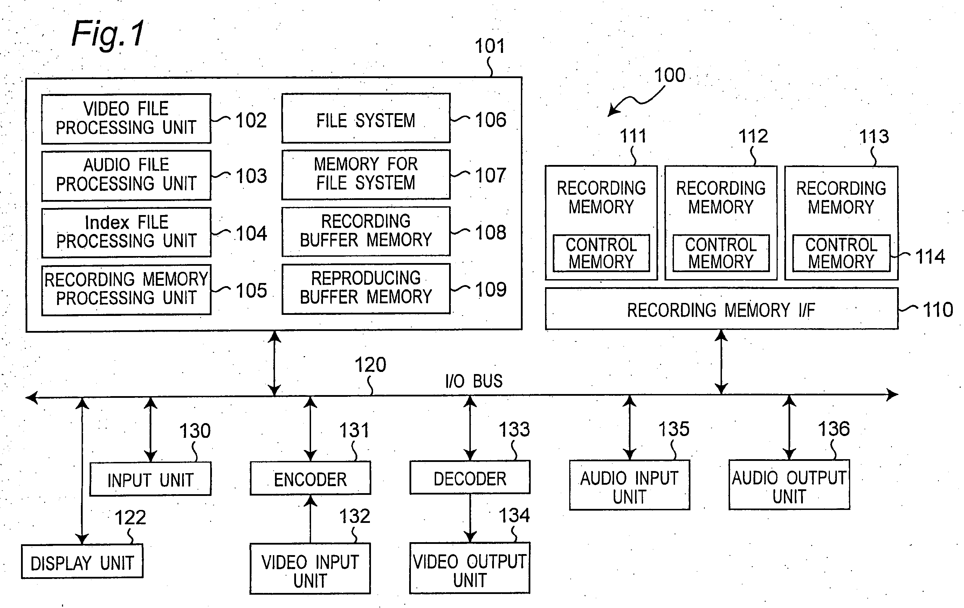

FIG. 1 is a block diagram showing a configuration of a recording/reproducing apparatus 100 for video or audio data according to Embodiment 1 of the present invention. The recording/reproducing apparatus 100 includes a system control unit 101, an I/O bus 120, a display unit 122 which displays a recording/reproducing state for a user, a plurality of detachable recording memories 111 to 113, a recording memory I/F unit 110 connected to a recording memory, an input unit 130 which accepts a designation of recording or reproducing of a file by a user, a video input unit 132 which inputs a video signal, an encoder 131 which encodes a video signal, an audio input unit 135 which inputs an audio signal, a decoder 133 which decodes a video signal, a video output unit 134 which outputs the decoded video signal, and an audio output unit 136 which outputs an audio signal.

The system control unit 101 is realized by a computer including a CPU and a memory. The system control unit 101 is equipped with a video file processing unit 102, a audio file processing unit 103, an Index file processing unit 104, a recording memory processing unit 105, a file system 106, memory for a file system 107, a recording buffer memory 108, and a reproducing buffer memory 109. The unit included in the system control unit 101 is realized by executing various programs in the CPU. As the memories included in the system control unit 101, for example, different memories may be used for various applications, respectively. The memories may also be realized such that a single memory is divided into regions to be used for different applications.

A video signal input from the video input unit 132 is compressed into a signal having a 1/5 code amount by a compressing process of, e.g., SMPTE-314M (DV-Based 25M) performed by the encoder 131. The video file processing unit 102 files the compressed data of SMPTE-314M with reference to a 1-frame unit (DIF format file). In case of NTSC, a data amount per 1 frame of the DIF format file is fixed to 120,000 Bytes.

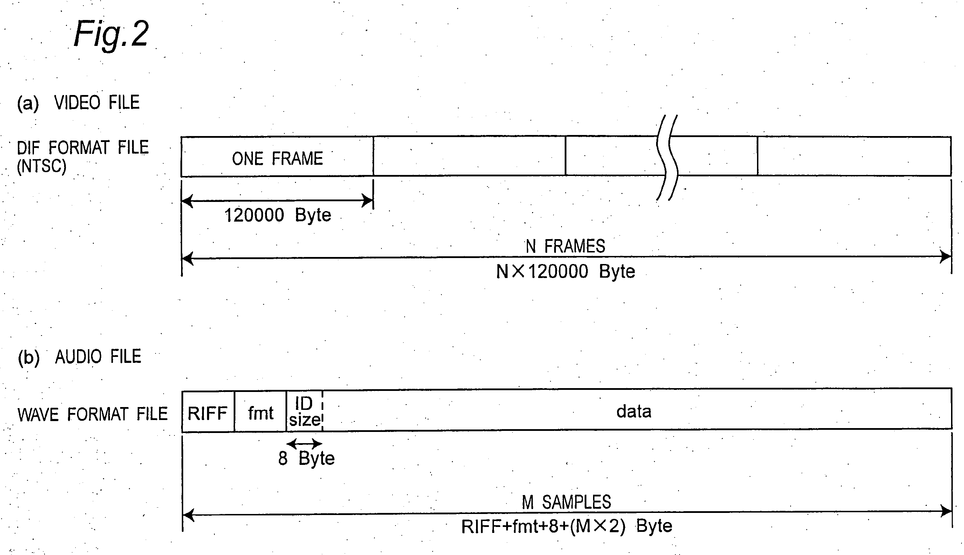

FIG. 2 (a) shows the structure of the DIF format file. The file has no header or the like, and has a structure in which compressed data are arranged in an order of frames. For this reason, a file size in N-frame recording is N times the code amount per frame.

Although two audio channels can be stored in the DIF format file, audio data in the DIF format file is not used in the embodiment, and the audio data is recorded as another file. This is because, in an editing operation for business use in a broadcasting station or the like, editing operations for video data and audio data are independently performed in many cases, and the video data and the audio data are generally handled as independent files in a professional-use nonlinear editing facility.

Audio data input from the audio input unit 135 is filed in a Wave format by the audio file processing unit 103. An example of the Wave format file is shown in FIG. 2 (b). The. Wave file is a file of one of RIFFs (Resource Interchange File Formats), and is constituted by a plurality of chunks. Each chunk is constituted by a 4-character ID (ASCII 4 Bytes), a chunk data size of 4 Bytes, and actual chunk data. An RIFF chunk is set at the head of a file to indicate that the file is of the Wave format. In an fmt chunk, a structure including a sample frequency, a quantifying bit number, and the like of audio data stored in the file is stored. Actual audio data is stored in a data chunk subsequently to a chunk ID and a chunk size. A file size obtained when the quantifying bit number of the audio data is set at 16 bits is as follows:

RIFF + fmt + 8 + (Mx2) Byte
RIFF = the number of bytes of RIFF chunk
fmt = the number of bytes of fmt chunk
M = the total number of samples of audio data

Audio files are recorded for channels, respectively. Therefore, when the number of channels of audio data to be recorded is two, two Wave channels are independently recorded for the two channels, respectively.

The recording memories 111 to 113 are of, e.g., PCMCIA format, and are designed to be detachable. The recording memories 111 to 113 are connected to the recording memory I/F unit 110 by, e.g., a card bus. The recording memories 111 to 113 preferably have at least two card buses to smoothly perform continuous recording. In the embodiment, although three card buses are used, the number of card buses is not limited to three, and four or more card buses may be used.

The recording memories 111 to 113 are formatted by a file system such as FAT 16 or the like. The files are written in the recording memories by updating of management information of FAT by the file system 106 in the system control unit 101 and a data write operation in the recording memories.

The free capacities of the recording memories 111 to 113 are checked by the recording memory processing unit 105 through the file system 106. In video/audio recording, a memory to be recorded is designated from a plurality of recording memories by the recording memory processing unit 105.

Video and audio recording operations are performed according to a designation from the input unit 130. When recording is designated to be started, one DIF format video file on which video data is to be recorded and two Wave files on which audio data is to be recorded are opened to record the data. At this time, video recording start time and audio recording start time are synchronized with each other.

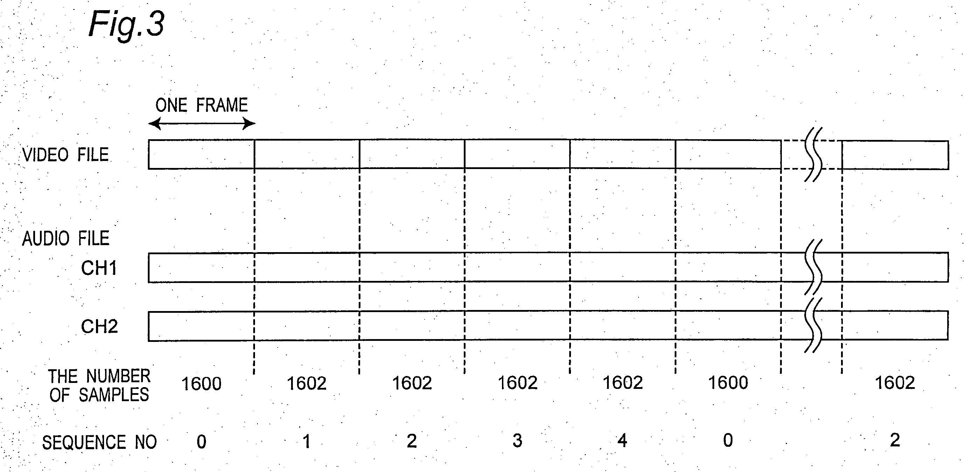

Data writing in the recording memory is ended when the recording operation is designed to be stopped to close the files. Therefore, the series of recording operations (1 clip) are executed to newly form one video file and two audio files. At this time, synchronization of one video file and two audio files in recording is shown in FIG. 3. In NTSC having a frame frequency of 29.97 Hz, when an audio sampling frequency is 48 kHz, the number of audio samples in 1-frame time is not integer, and the number of audio samples is integer in 5-frame time. In an audio Wave format file, a video frame cycle is not described. However, since the audio data is synchronized with the video data, the numbers of samples per frame are counted such that the numbers are changed into 1600, 1602, 1602, 1602, and 1602 in five frame cycles. The number of samples from the start of recording to the end of the recording is calculated with reference to the five frames. Since repeated phases of the five frames are represented by sequence Nos., sequence Nos. 0 to 4 are repeated. Therefore, data sizes per frame are as follows:

1600 x 2 Bytes (sequence No. =0)
1602 x 2 Bytes (sequence Nos. = 1, 2, 3, 4).

With these expressions, the file size of a Wave file having a predetermined number of frames can be calculated. Sequence number No. at the start of recording is set to be 0.

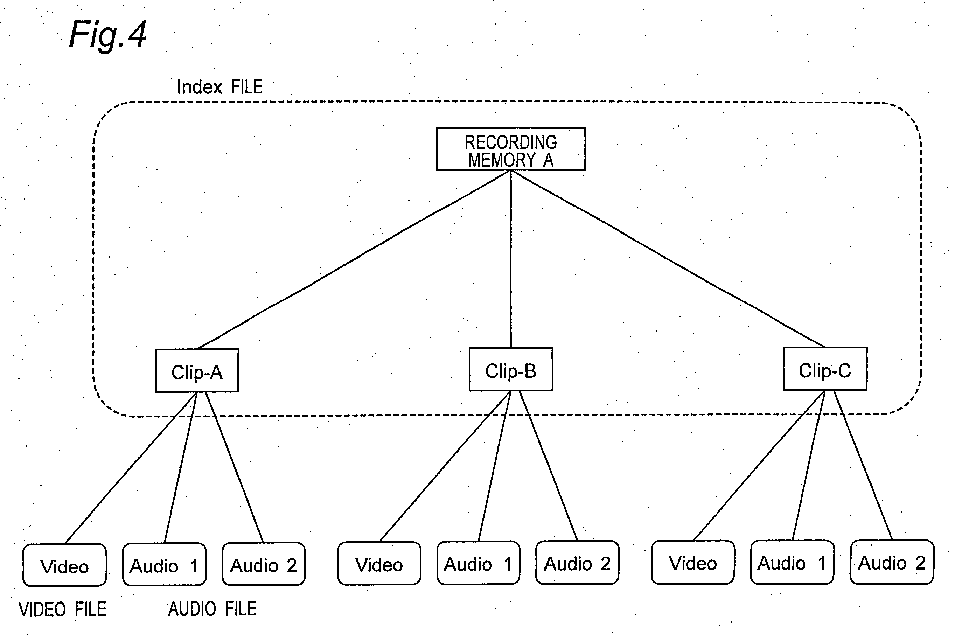

At the end of clip recording, an Index file in which management information of the clip is described is updated by the Index file processing unit 104. FIG. 4 shows a relationship between the Index file, a video file, audio file, and a clip.

One Index file is recorded in one recording memory, and represents information of a clip included in the recording memory, linkage of the clip, a video file, and an audio file, and the like.

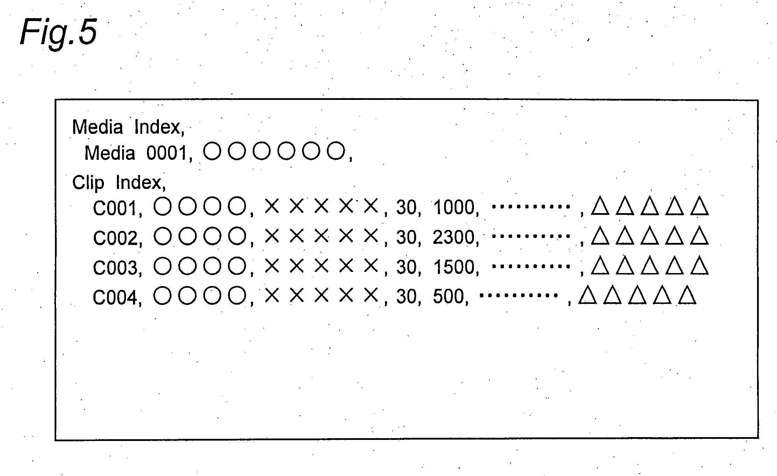

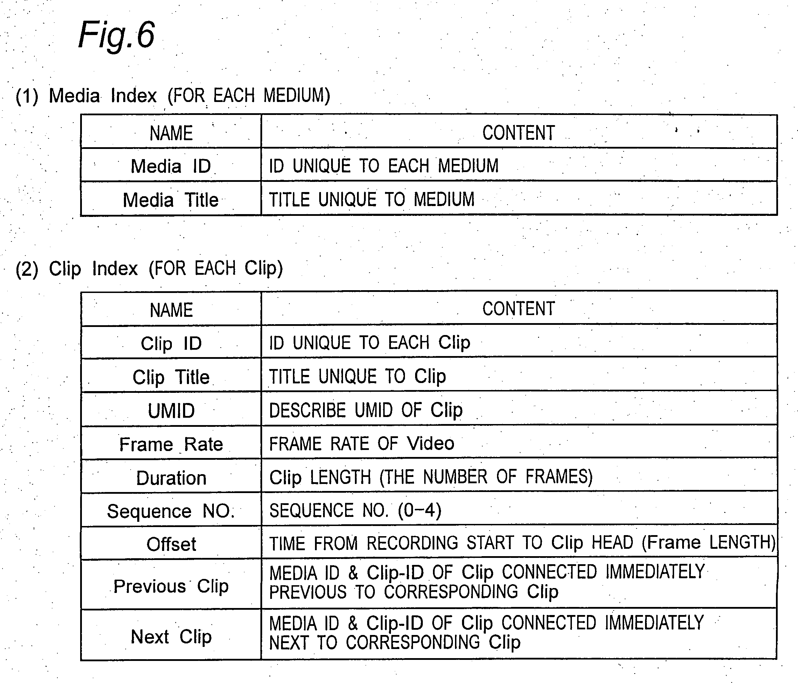

FIG. 5 shows a description of an Index file, and FIG. 6 shows elements of the Index file. The Index file includes two-layered data of Media Index representing information unique to a recording memory and Clip Index representing unique information of each clip. In the Index file, the elements shown in FIG. 6 are described. The Index file is recorded as a file in a text format, and these elements are delimited by commas. The Index file may be described in a format other than the text format.

A Media ID in the Media Index is an ID uniquely added to each media. For example, when the media is formatted, a unique ID can be added to the media depending on a combination of time for the format, the ID of the device, and the like. In manufacturing a recording memory, unique serial numbers may be given to control memories 114 in the recording memories 111, 112, and 113. Therefore, the serial numbers may also be defined as Media IDs serving as recognition IDs unique to media.

Operations performed when the serial numbers of the recording memories 111, 112, and 113 are used as Media IDs are as follows. When the recording memories 111, 112, and 113 are inserted into a recording apparatus, the recording apparatus reads the serial numbers recorded on the control memories 114 in the recording memories 111, 112, and 113 using a predetermined specific command, and temporarily stores the serial numbers in the recording apparatus. When the Media Index is updated, the serial numbers temporarily stored in the recording apparatus are read and recorded as the Media IDs serving as recognition IDs.

In the embodiment, the unique serial number recorded on the control memory 114 is directly used. However, recognition IDs, obtained by directly recording the serial numbers or performing correction, addition, or the like to some of the serial numbers by the device in a management portion of a file system which read the serial numbers from the control memories 114 to perform normal data access or a specific management file when the recording memories 111, 112, and 113 are inserted into the recording apparatus or the like and initialized, may be used,. In this manner, since a management portion or a specific file of the file system which performs normal data access is accessed, reading can be more smoothly performed than when the control memories 114 in the recording memories 111, 112, and 113 are accessed.

In the embodiment, the recording apparatus is designed to read the recognition IDs when the recording memories 111, 112, and 113 are inserted. However, the invention is not limited to this configuration. For example, only when an instruction for recording a clip on the recording memories 111, 112, and 113 is executed or when the recording memories 111, 112, and 113 are writable, the recognition IDs of the recording memories may be read by the device. In this manner, read operations of unnecessary recognition IDs can be omitted.

Media Title is a title which can be arbitrarily added by a user and is unique to a media. As the title, a name which can be easily recognized by a user can be freely added. Since a media in the device is specified by a Media ID, a Media Title can be freely changed even though a video file or an audio file is recorded.

Clip ID in a Clip Index is an ID uniquely added to each clip. For example, when a clip is recorded, a unique ID can be added by a combination of recording start time, the ID of the device, and the like. The video file, the audio file, and the clip are associated with each other by describing the Clip ID in a file name. For example, a video file having a Clip ID of C001 is defined as C001.DIF, and files of two audio channels are defined as C001_1.WAV and C001_2.WAV, so that the clip, the video file, and the audio file can be associated with each other.

Clip Title is a title which can be arbitrarily added by a user and is unique to a clip. As the title, a name which can be easily recognized by a user can be freely added. Since a clip in the device is specified by a Clip ID, a Clip Title can be freely changed even though a video file or an audio file is recorded.

UMID (Unique Material Identifier) is an ID to specify a material (stream) regulated by an SMPTE 330. A unique UMID is set for each Clip.

Frame Rate represents a frame frequency of a video signal, and Duration represents the number of frames included in a clip. Total recording time of the clip can be calculated by the Frame Rate and the Duration.

Sequence No. represents a sequence No. at the head of a clip. The Sequence No. is 0 in a normal recording operation in which recording start time coincides with the head of the clip. The Sequence No. obtained when files are continuously recorded on a plurality of recording memories will be described later.

Offset represents time from the start of recording to the head of the clip and, like the Sequence No., the Offset is 0 in a normal recording operation in which the recording start time coincides with the head of a clip. The Offset obtained when files are continuously recorded on a plurality of recording memories will be described later. Previous Clip and Next Clip will also be described later.

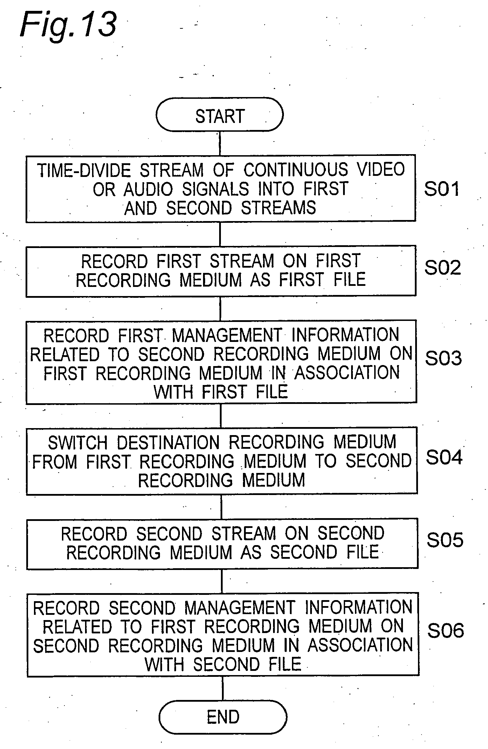

A method of continuously recording a stream of the continuous video signals and/or audio signals over a plurality of recording media will be described below with reference to the flow charts in FIGS. 13 to 16.

A method of continuously recording a stream of video signals or audio signals over a plurality of recording media will be described first with reference to FIG. 13. The recording method mentioned here includes the following steps.

(a) A stream (material) of continuous video or audio signals is time-divided into a first stream and a second stream (S01). In this case, the volume of the entire stream is known in advance, and streams having volumes which can be recorded on the two recording media (the first recording medium and the second recording medium) can be calculated. The entire stream need not be actually divided into two streams, and the stream may be virtually divided into two streams.

(b) The first stream is recorded on the first recording medium as a first file (S02).

(c) First management information related to the second recording medium is recorded on the first recording medium in association with the first file (S03). As the management information, for example, the serial number described above can be used, and a recognition ID determined on the basis of the serial number may be used. Management information related to the next recording medium is recorded after the first file is recorded. In contrast to this, the first file may be recorded after the management information related to the next recording medium is recorded.

(d) The destination recording medium is switched from the first recording medium to the second recording medium (S04). When the capacity of the recording buffer memory 108 is sufficiently large, recording on the second recording medium may be performed in parallel to recording on the first recording medium.

(e) The second stream is recorded on the second recording medium as a second file (S05).

(f) Second management information related to the first recording medium is recorded on the second recording medium in association with the second file (S06). In this case, step S03 and step S05 are respectively performed. However, only one of step S03 and step S06 may be performed. The first and second pieces of management information are preferably recorded as management information files.

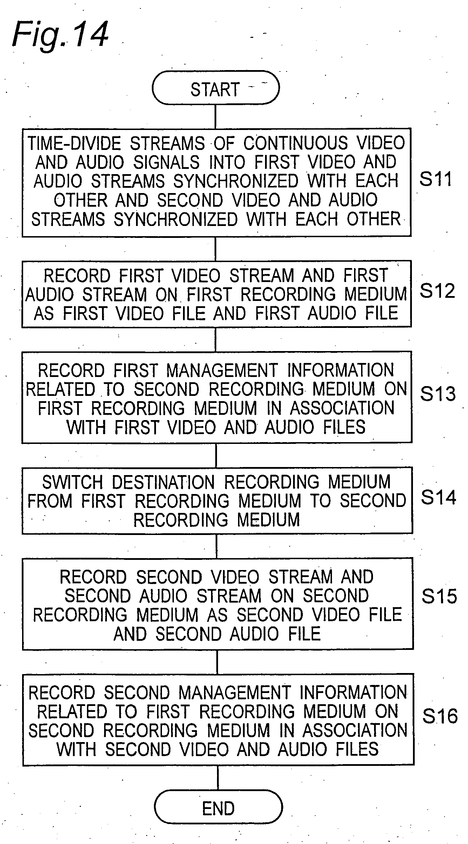

A method of continuously recording streams of video signals and audio signals over a plurality of recording media in synchronism with each other will be described below with reference to FIG. 14. The recording method mentioned here includes the following steps.

(a) A stream of continuous video signals and a stream of continuous audio signals are time-divided into a first video stream and a first audio stream synchronized with each other and a second video stream and a second audio stream synchronized with each other (S11).

(b) The first video stream and the first audio stream are recorded on the first recording medium as a first video file and a first audio file, respectively (S12). The first video file and the second video file are synchronized with each other. More specifically, recording start time and recording end time are caused to coincide with each other. Furthermore, when a frame frequency of the video signals and a sample frequency of the audio signals are different from each other, the video signals and the audio signals are preferably synchronized with each other in association with audio signals the number of which is a predetermined number of samples every predetermined number of frames.

(c) First management information related to the second recording medium is recorded on the first recording medium in association with the first video file and the audio file (S13).

(d) The destination recording medium is switched from the first recording medium to the second recording medium (S14). When the capacity of the recording buffer memory 108 is sufficiently large, recording on the second recording medium may be performed in parallel to recording on the first recording medium.

(e) The second video stream and the second audio stream are recorded on the second recording medium as a second video file and a second audio file, respectively (S15).
(f) Second management information related to the first recording medium is recorded on the second recording medium in association with the second video file and the second audio file (S16).

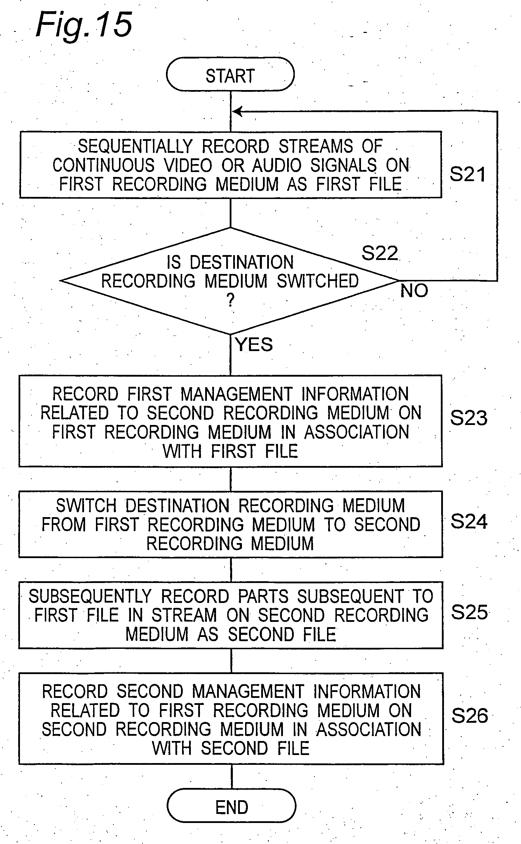

A method of sequentially, continuously recording streams of video signals and audio signals over a plurality of recording media will be described below with reference to FIG. 15. The recording method mentioned here includes the following steps.

(a) A stream of continuous video or audio signals is sequentially recorded on the first recording medium as a first file (S21). For example, in this case, the volume of the entire stream is not known, and the stream to be input is sequentially recorded.
(b) It is decided whether the destination recording medium is switched from the first recording medium to the second recording medium (S22). For example, the volume of a remaining stream to be recorded accumulated in the recording buffer memory 108 is compared with a remaining capacity of the first recording medium. When the volume of the remaining stream to be recorded is larger than the remaining capacity of the first recording medium, the destination recording media are switched. When the capacity of the recording buffer memory 108 is sufficiently large, recording on the second recording medium may be performed in parallel to recording on the first recording medium. When the remaining capacity of the first recording medium is sufficiently large, the control flow returns to step S21 without switching the destination recording media.
(c) First management information related to the second recording medium is recorded on the first recording medium in association with the first file (S23).
(d) The destination recording medium is switched from the first recording medium to the second recording medium (S24). As described above, when the recording on the second recording medium is performed in parallel to the recording on the first recording medium, step S24 is skipped.
(e) Parts subsequent to the first file in the stream are sequentially recorded on the second recording medium as a second file (S25).
(f) Second management information related to the first recording medium is recorded on the second recording medium in association with the second file (S26). In this case, step S23 and step S26 are respectively performed. However, only one of step S23 and step S26 may be performed.

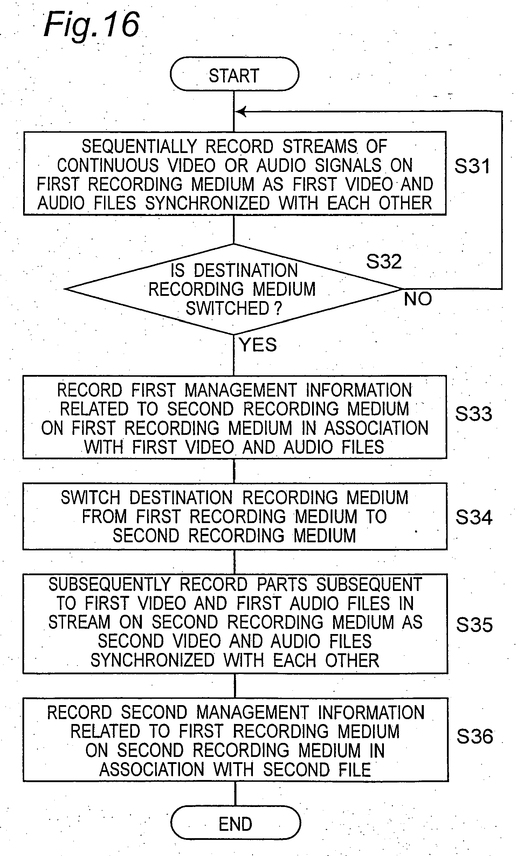

Furthermore, a method of sequentially, continuously recording streams of video signals and audio signals over a plurality of recording media in synchronism with each other will be described below with reference to FIG. 16. The recording method mentioned here includes the following steps.

(a) Streams of continuous video and audio signals are sequentially recorded on the first recording medium as a first video file and a first audio file synchronized with each other (S31).
(b) It is decided whether the destination recording medium is switched from the first recording medium to the second recording medium (S32). When the capacity of the recording buffer memory 108 is sufficiently large, recording on the second recording medium may be performed in parallel to recording on the first recording medium.
(c) First management information related to the second recording medium is recorded on the first recording medium in association with the first video and audio files (S33).
(d) The destination recording medium is switched from the first recording medium to the second recording medium (S34). As described above, when the recording on the second recording medium is performed in parallel to the recording on the first recording medium, step S34 is skipped.
(e) Parts subsequent to the first video and audio files in the streams are sequentially recorded on the second recording medium as a second video file and a second audio file synchronized with each other (S35).
(f) Second management information related to the first recording medium is recorded on the second recording medium in association with the second video and audio files (S36).

According to the recording methods in the embodiment, as described above, when streams of continuous video signals and/or continuous audio signals are recorded over a plurality of recording media, pieces of management information related to the previous and next recording media are recorded on the recording media in association with a video file or an audio file. For this reason, even though the plurality of recording media are reproduced by another device, the contexts of the respective video files and/or audio files become clear to make it possible to perform continuous recording using the plurality of recording media with reference to management information recorded on each recording medium. Since video files of the respective recording media are independent of each other, each recording medium can be reproduced by itself.

A program which causes a computer to execute the steps may be applied. The recording program may be recorded on a computer readable recording medium. As the recording medium, any one of a semiconductor memory such as a memory card, an optical recording medium such as a CD-R or a DVD, a magneto-optical recording medium such as an MO, a magnetic recording medium such as a flexible disk may be used. As described above, the recording program executed by the computer is executed or the recording program is read from the recording medium on which the recording program is recorded and then executed to make it possible to cause the computer to drive as a control unit of a recording apparatus.

Furthermore, the recording method of recording a stream of continuous video signals and/or audio signals over a plurality of recording media will be described below as a more concrete embodiment.

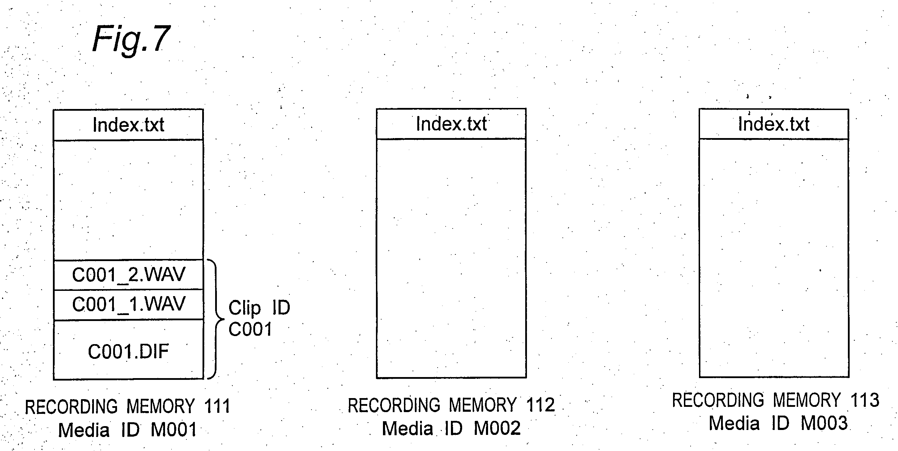

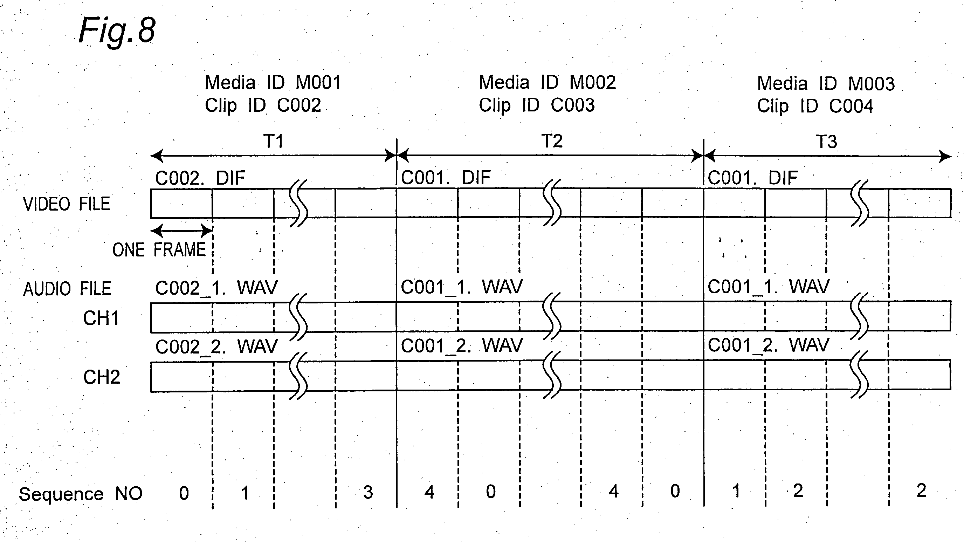

Immediately before recording is started, states of the three recording memories are as shown in FIG. 7. FIG. 7 shows file configurations in the recording memories. Clip ID C001 is recorded on the recording memory 111 (media ID M001). As files, a video file "C001.DIF", audio files "C001_1.WAV" and "C001_2.WAV", and an Index file "Index.txt" are recorded on the recording memory 111. The remaining area in the recording memory 111 is free. On the recording memory 112 (Media ID M002) and the recording memory 113 (Media ID M003), only an Index file Index.txt is recorded. FIG. 8 shows a relationship between the video file and the audio file in recording and a clip.

At the start of video recording, as in recording or the like by a camera recorder, time until the recording is ended is not fixed in many cases. Therefore, at the start of the recording operation, it is not known whether recording is ended by one recording memory. However, as described above, data amounts of a video file and an audio file per frame are fixed. For this reason, when a stream of video signals is recorded on the recording memory 111, recordable time T1 (frame) in the recording memory 111 can be calculated. In this case, the recordable time T1 is the maximum time in which all a video file and audio files of two channels can be recorded in Media ID M001. When the volume of the stream exceeds the time T1 (frame), Clip ID C002 in Media ID M001 is ended, a new clip (Clip ID C001) is formed in a new recording memory (Media ID M002), the stream is continuously recorded over the two recording memories. In this case, Sequence Nos. representing the numbers of samples of an audio file in a frame unit are recorded to be continued in Clip ID C002 in the recording memory of Media ID M001 and Clip ID C001 in the recording memory of Media ID M002.

When the volume of a stream exceeds a recordable time T2 frame calculated in advance in the recording memory of Media ID M002, as in the above case as well, the stream is continuously recorded on the recording memory of Media ID M003. In this case, Sequence Nos. are recorded to be continued in Clip ID C001 in the recording memory of Media ID M002 and Clip ID C001 in the recording memory of Media ID M003.

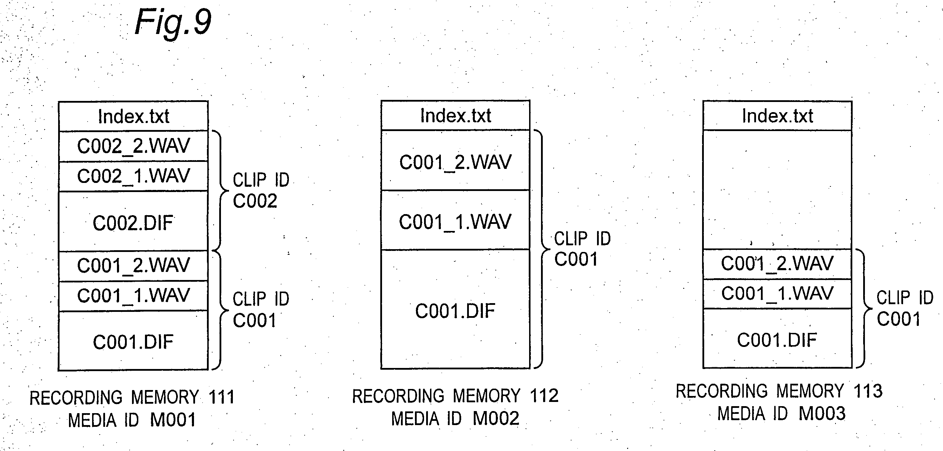

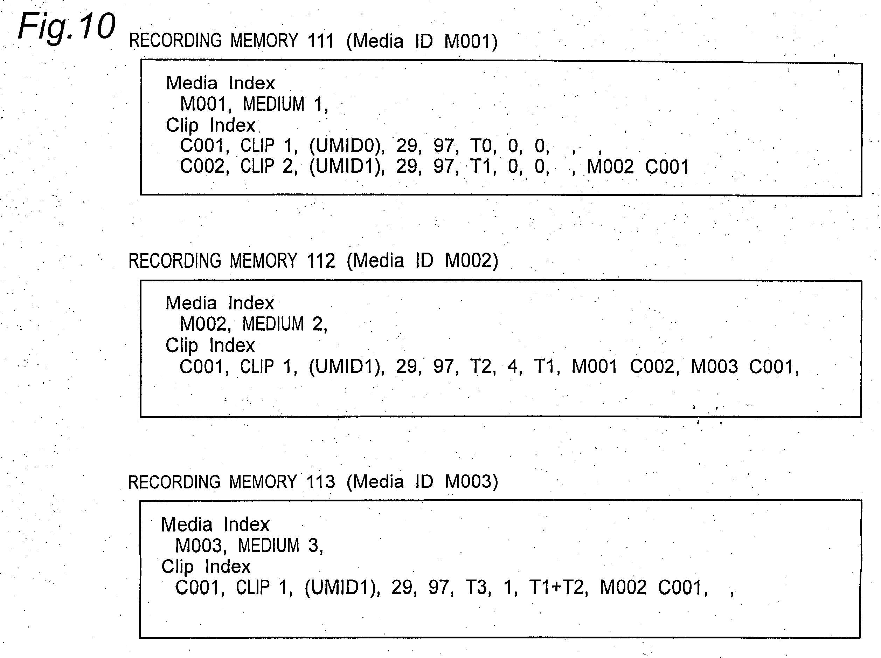

When recording time in the recording memory of Media ID M003 is ended in a T3 frame, the stream is recorded as three clips over three media as shown in FIG. 8. Files respectively recorded on the recording memories are shown in FIG. 9. FIG. 10 shows the contents of Index files in the recording memories.

Previous Clips in the elements in the index files shown in FIG. 6 represent a Media ID and a Clip ID of an immediately previous clip, and a Next Clip represents a Media ID and a Clip ID of an immediately next clip.

Therefore, as shown in FIG. 10, three clips divided in the three recording memories represent the following connection information by Index files.

- Previous Clip

  Clip immediately previous to Media ID M001 Clip ID C002 = NULL (no data)
  Clip immediately previous to Media ID M002 Clip ID C001 = Media ID M001 Clip ID C002
  Clip immediately previous to Media ID M003 Clip ID C001 = Media ID M002 Clip ID C001

- Next Clip

  Clip immediately next to Media ID M001 Clip ID C002 = Media ID M002 Clip ID C001
  Clip immediately next to Media ID M002 Clip ID C001 = Media ID M003 Clip ID C001
  Clip immediately next to Media ID M003 Clip ID C001 = NULL (no data)

From the start of recording, the time of the head of the Clip is described in the Offset in unit of frame. In a plurality of continuous clips, the Offset of a head clip (Media ID M001 Clip ID C002) becomes 0. The Offset of the second clip (Media ID M002 Clip ID C001) becomes T1. The Offset of the third clip (Media ID M003 Clip ID C001) becomes T1+T2.

To UMID of three continuous clips, as shown in FIG. 10, the same ID is given as (UMID1), and the uniformity of the UMIDs can be kept when three clips are connected to each other in the later editing step and the like.

With the above configuration, even though video data or audio data is continuously recorded on a plurality of recording memories, with reference to Index files of respective recording memories, previous and next recording memories and previous and next clips can be specified, and a continuous clip can be easily reproduced. Time from the start of recording to the head of a clip can be obtained by an Offset. For this reason, when only some clips can be obtained, time for continuous recording can be obtained. Furthermore, since divided clips have the same UMIDs, even though there are only some clips present among the divided clips, it can be confirmed by the same UMIDs that the clips are recorded in the same continuous recording.

In the embodiment, SMPTE-314M is described as a compression method. However, it is apparent that the same effect as described above can be achieved by a compression method using a fixed length in a frame.

(Embodiment 2)

Embodiment 2 will explain an example wherein a method in which an amount of code is variable depending on frames is used as a video compression method, and variable length coding (VBR) of MPEG-2 is used as a method using inter-frame compression. Since the configuration of Embodiment 2 is the same as that of Embodiment 1 except that a method of calculating a video file size and switching of recording memories are described in detail, a description thereof will be omitted.

In VBR compression of MPEG-2, an amount of code in each frame and amounts of code in a plurality of frames are not constant. Therefore, at the start of a recording operation, the number of frames which can be recorded on one recording memory cannot be easily calculated. Therefore, a file size is predicted in unit of GOP to calculate the number of frames which can be recorded on a media.

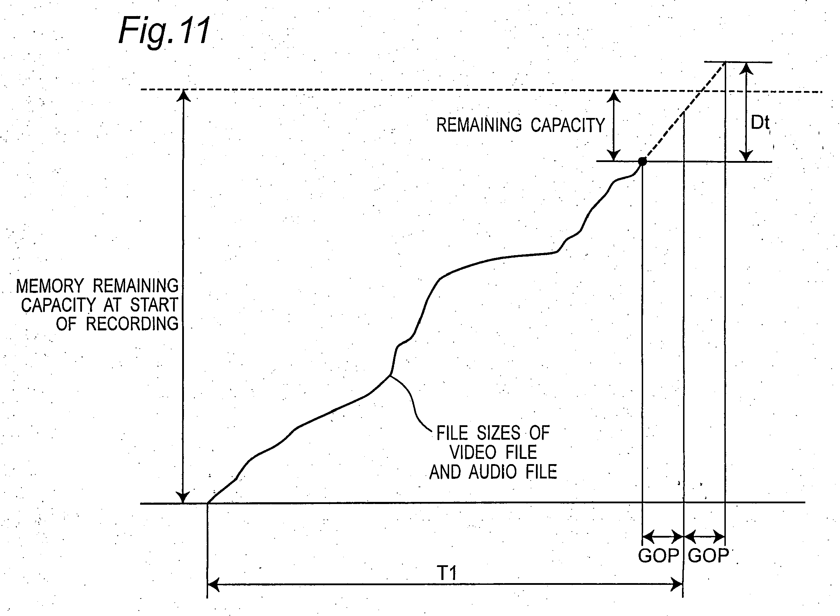

FIG. 11 shows manners of increasing of file sizes of a video file and an audio file with recording time. An increase in file size (Dt) at the end of two continuous GOPs is predicted by the following equation at the starts of GOPs.

$$Dt = (Da \times 2M) + ((Rmax/Fnum) \times 2M)$$

M: the number of frames of one GOP
Da: Audio data size in one frame unit
Rmax: Maximum rate (Max rate) of MPEG at VBR
Fnum: frame frequency

In VBR recording of MPEG performed here, the maximum value of a transfer rate of coding data is regulated by a Max rate, and the transfer rate does not exceed that maximum rate. The Max rate is divided by a frame frequency to calculate the maximum data amount of each frame. As shown in FIG. 11, when the value Dt is larger than a remaining capacity of the recording memory at the present, writing in the present recording memory is ended by a GOP to be recorded, and next and subsequent GOPs are written in the next recording memory as another clip. The final GOP of the recording memory is defined as a Closed GOP.

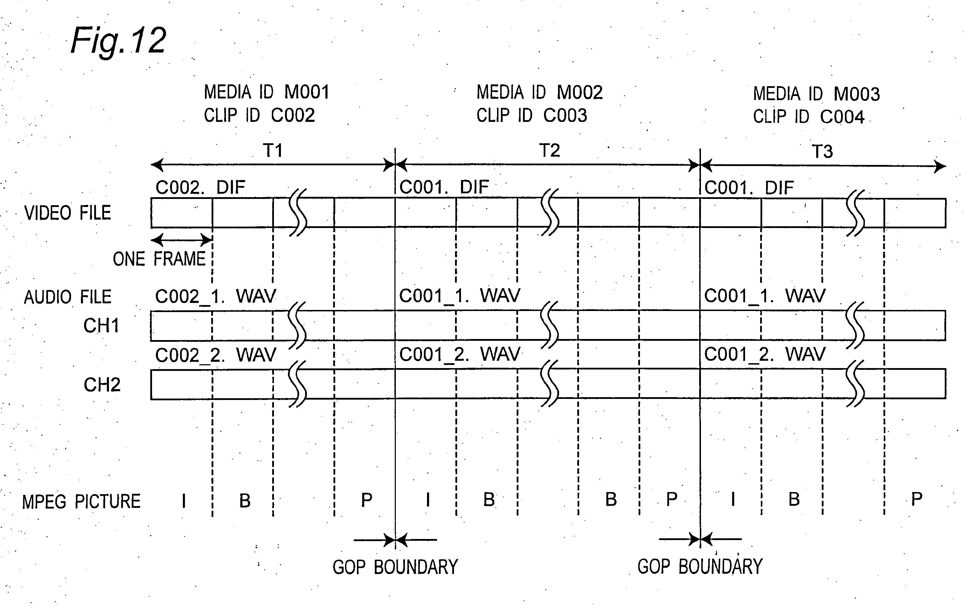

FIG. 12 shows a manner of switching of recording memories. When recording is performed while switching recording memories, the switching must be performed at a boundary between GOPs. Since the final GOP of the recording memory is a Closed GOP, the final frame is a P picture.

With respect to an audio file, as shown in FIG. 12, as in Embodiment 1, recording is performed such that the recording start frame and the recording end frame of the audio file coincide with the recording start frame and the recording end frame of the video file, respectively.

Semiconductor memories are exemplified as recording media in all the embodiments. However, it is apparent that the same effect as described above can be achieved even in another recording medium such as an optical disk or a hard disk.

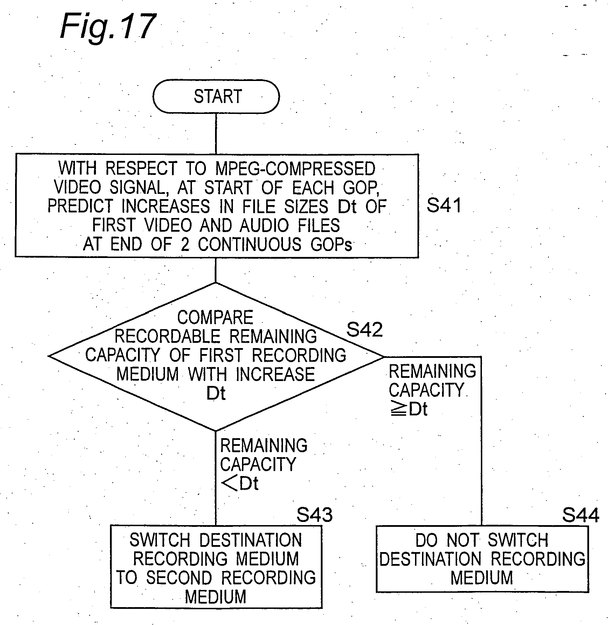

FIG. 17 is a flow chart of the step of deciding whether destination recording media are switched in Embodiment 2 of the present invention. More specifically, the flow chart is obtained by embodying step S22 in FIG. 15 in Embodiment 1 or step S32 in FIG. 16. The flow chart in FIG. 17 will be described below.

(a) When a video signal is an MPEG-compressed video signal, increases in file size Dt of a first video file and a first audio file at the end of two continuous GOPs are predicted by the following equation at the start of each GOP.

$$Dt = (Da \times 2M) + ((Rmax/Fnum) \times 2M)$$

M: the number of frames of one GOP
Da: Audio data size in one frame unit
Rmax: Maximum rate (Max rate) of MPEG at VBR
Fnum: frame frequency

(b) A recordable remaining capabity of the first recording medium is compared with the increase Dt (S42).

(c) When the remaining capacity is smaller than the increase Dt (remaining capacity < Dt), the destination recording media are switched (S43).

(d) When the remaining capacity is equal to or larger than the increase Dt (remaining capacity ≥ Dt), the destination recording media are not switched (S44). In this case, in FIG. 15, the control flow returns to step S21 to continue recording on the first recording medium as a first file. In case of FIG. 16, the control flow returns to step S31 to continue recording on the first recording medium as a first video file and a first audio file.

As described above, when a stream of video signals which are MPEG-compressed is recorded, an increase of video file increasing in a predetermined unit can be predicted by the above numerical expression in advance, and switching of destination recording media can be determined. In this manner, the stream of the video signals can be continuously recorded over a plurality of recording media without causing the recording buffer memory to overflow.

(Embodiment 3)

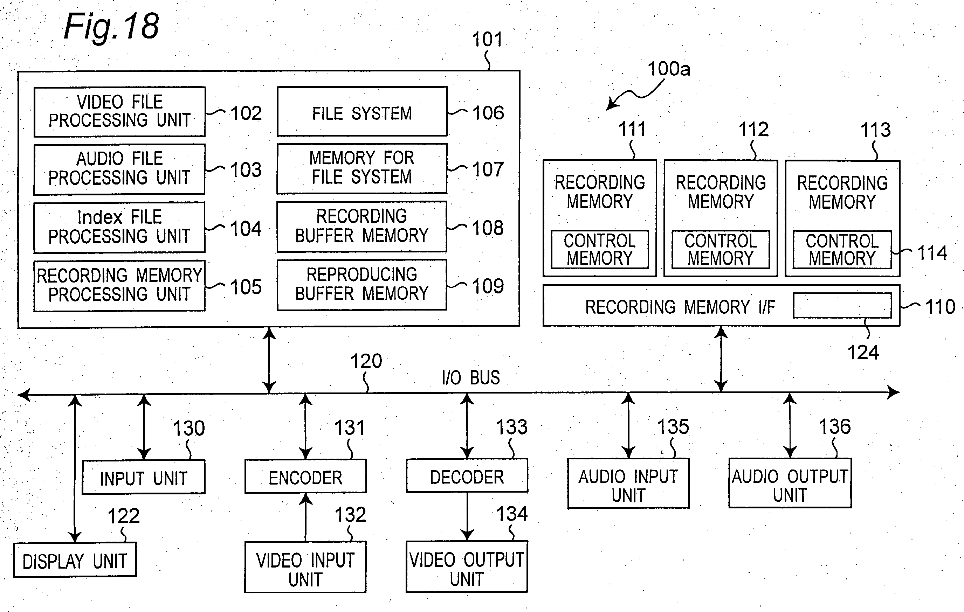

FIG. 18 is a block diagram showing the configuration of a video and audio recording/reproducing apparatus 100a according to Embodiment 3. The video and audio recording/reproducing apparatus 100a is different from the recording/reproducing apparatus according to Embodiment 1 in that the apparatus 100a includes serial number detection unit 124 which detect serial numbers serving as manufacture code numbers unique to the recording memories 111, 112, and 113. The serial numbers are detected by the serial number detection unit 124 to make it possible to specify the recording memories 111, 112, and 113. In this manner, a recording memory previous to and next to the corresponding recording memory can be easily specified.

In this case, the serial numbers of the recording memories 111, 112, and 113 are used as Media IDs. Operations performed when the serial numbers of the recording memories 111, 112, and 113 are used as the media IDs are as follows. When the recording memories 111, 112, and 113 are inserted into a recording apparatus, the recording apparatus uses the serial number detection unit 124 to read the serial numbers of the recording memories 111, 112, and 113 to temporarily store the serial numbers in the recording apparatus. When a video file is separately recorded over one recording memory 111 to the other recording memories 112 and 113, the serial numbers temporarily stored in the recording apparatus are read as recognition IDs. The recognition IDs are recorded as Media IDs of a Previous Clip and a Next Clip.

In this embodiment, the serial numbers are directly used. However, recognition IDs, obtained by directly recording the serial numbers or performing correction, addition, or the like to some of the serial numbers by the device in a management portion of a file system which read the serial numbers to perform normal data access or a specific management file when the recording memories 111, 112, and 113 are inserted into a recording apparatus or the like to be initialized, may be used. In this manner, since a management portion or a specific file of the file system which performs normal data access is accessed, reading can be more smoothly performed than that performed when data are directly read from the recording memories 111, 112, and 113 each time.

In the embodiment, the recording apparatus is designed to read the recognition IDs when the recording memories 111, 112, and 113 are inserted. However, the invention is not limited to this configuration. For example, only when an instruction for recording a clip on the recording memories 111, 112, and 113 is executed or when the recording memories 111, 112, and 113 are writable, the recognition IDs of the recording memories may be read by the device. In this manner, read operations of unnecessary recognition IDs can be omitted.

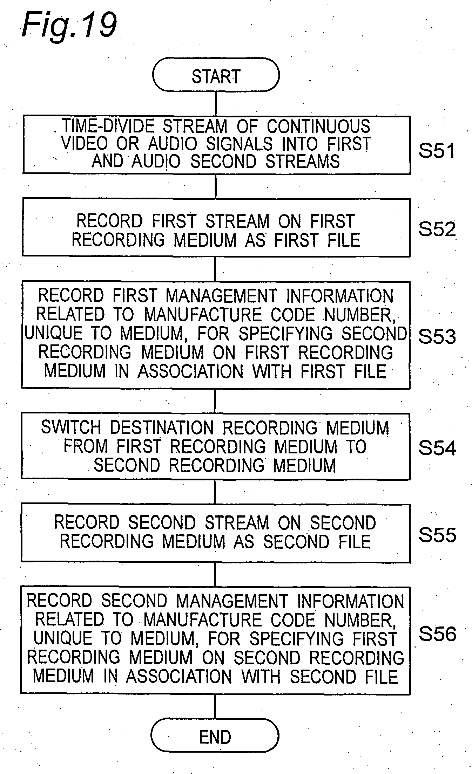

A method of continuously recording streams of the continuous video signals and/or audio signals over a plurality of recording media in the recording/reproducing apparatus 100a will be described below with reference to flow charts in FIGS. 19 to 22.

A method of continuously recording a stream of video signals or audio signals over a plurality of recording media will be described below with reference to FIG. 19. The recording method mentioned here includes the following steps.

(a) A stream of continuous video or audio signals is time-divided into a first stream and a second stream (S51). In this case, the volume of the entire stream is known in advance, and streams having volumes which can be recorded on two recording media can be calculated. The entire stream need not be actually divided into two streams, and the stream may be virtually divided into two streams.

(b) The above-described first stream is recorded on the first recording medium as a first file (S52).

(c) First management information related to a manufacture code number, being unique to a medium, for specifying the second recording medium is recorded on the first recording medium in association with the first file (S53). As the manufacture code number, for example, the serial number described above can be used, and a recognition ID obtained by correcting the serial number may be used. Management information related to the next recording medium is recorded after the first file is recorded. In contrast to this, the first file may be recorded after the management information related to the next recording medium is recorded.

(d) The destination recording medium is switched from the first recording medium to the second recording medium (S54). When the capacity of the recording buffer memory 108 is sufficiently large, recording on the second recording medium may be performed in parallel to recording on the first recording medium.

(e) The second stream is recorded on the second recording medium as a second file (S55).

(f) Second management information related to a manufacture code number, being unique to a medium, for specifying the first recording medium is recorded on the second recording medium in association with the second file (S56). In this case, step S53 and step S55 are respectively performed. However, only one of step S53 and step S56 may be performed. The first and second pieces of management information are preferably recorded as management information files.

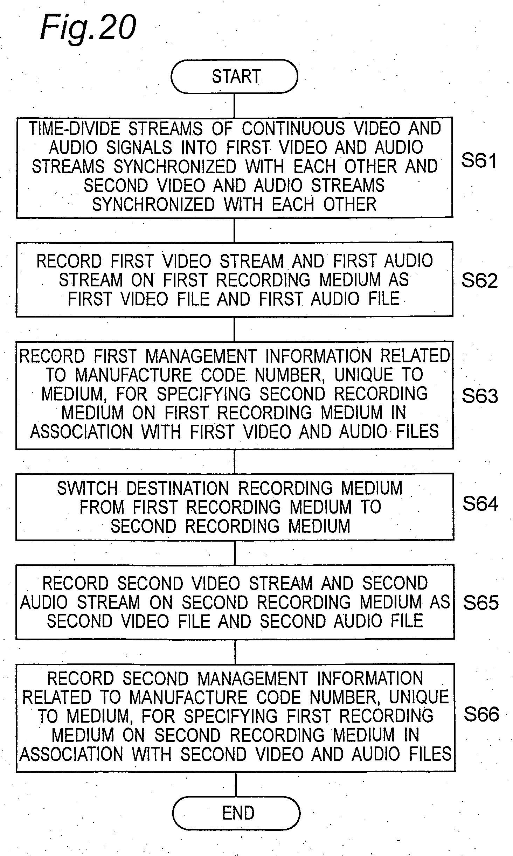

A method of continuously recording streams of video signals and audio signals over a plurality of recording media in synchronism with each other will be described below with reference to FIG. 20. The recording method mentioned here includes the following steps.

(a) A stream of continuous video signals and a stream of continuous audio signals are time-divided into a first video stream and a first audio stream synchronized with each other and a second video stream and a second audio stream synchronized with each other (S61).

(b) The first video stream and the first audio stream are recorded on the first recording medium as a first video file and a first audio file, respectively (S62). The first video file and the second video file are synchronized with each other. More specifically, recording start time and recording end time are caused to coincide with each other. Furthermore, when a frame frequency of the video signals and a sample frequency of the audio signals are different from each other, the video signals and the audio signals are preferably synchronized with each other in association with audio signals the number of which is a predetermined number of samples every predetermined number of frames.

(c) First management information related to a manufacture code number, being unique to a medium, for specifying the second recording medium is recorded on the first recording medium in association with the first video file and the audio file (S63).

(d) The destination recording medium is switched from the first recording medium to the second recording medium (S64). The capacity of the recording buffer memory 108 is sufficiently large, recording on the second recording medium may be performed in parallel to recording on the first recording medium.

(e) The second video stream and the second audio stream are recorded on the second recording medium as a second video file and a second audio file (S65).

(f) Second management information related to a manufacture code number, being unique to a medium, for specifying the first recording medium is recorded on the second recording medium in association with the second video file and the second audio file (S66).

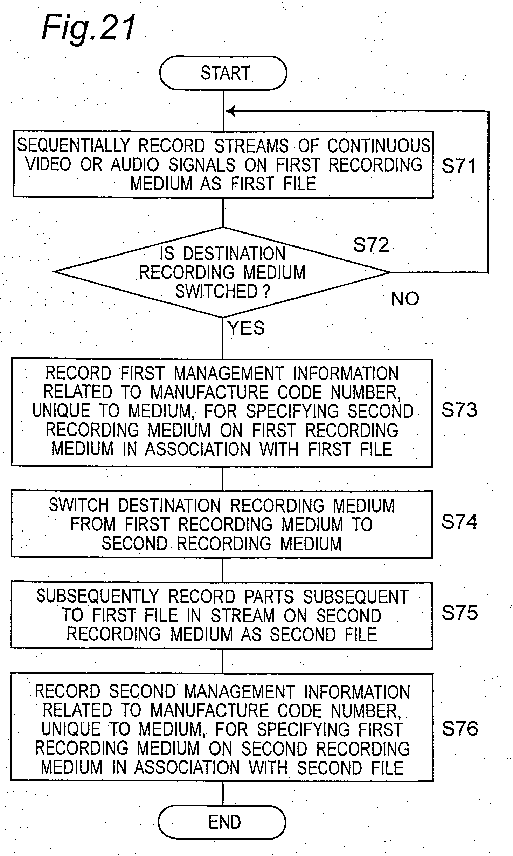

A method of sequentially, continuously recording streams of video signals and audio signals over a plurality of recording media will be described below with reference to FIG. 21. The recording method mentioned here includes the following steps.

(a) A stream of continuous video or audio signals is sequentially recorded on the first recording medium as a first file (S71). For example, in this case, the volume of the entire stream is not known, and the stream to be input is sequentially recorded.

(b) It is decided whether the destination recording medium is switched from the first recording medium to the second recording medium (S72). For example, the volume of a remaining stream to be recorded accumulated in the recording buffer memory 108 is compared with a remaining capacity of the first recording medium. When the volume of the remaining stream to be recorded is larger than the remaining capacity of the first recording medium, the destination recording media are switched. When the capacity of the recording buffer memory 108 is sufficiently large, recording on the second recording medium may be performed in parallel to recording on the first recording medium. When the remaining capacity of the first recording medium is sufficiently large, the control flow returns to step S71 without switching the destination recording media.

(c) First management information related to a manufacture code number, being unique to a medium, for specifying the second recording medium is recorded on the first recording medium in association with the first file (S73).

(d) The destination recording medium is switched from the first recording medium to the second recording medium (S74). As described above, when the recording on the second recording medium is performed in parallel to the recording on the first recording medium, step S24 is skipped.

(e) Parts subsequent to the first file in the stream are sequentially recorded on the second recording medium as a second file (S75).

(f) Second management information related to a manufacture code number, being unique to a medium, for specifying the first recording medium is recorded on the second recording medium in association with the second file (S76). In this case, step S73 and step S76 are respectively performed. However, only one of step S73 and step S76 may be performed.

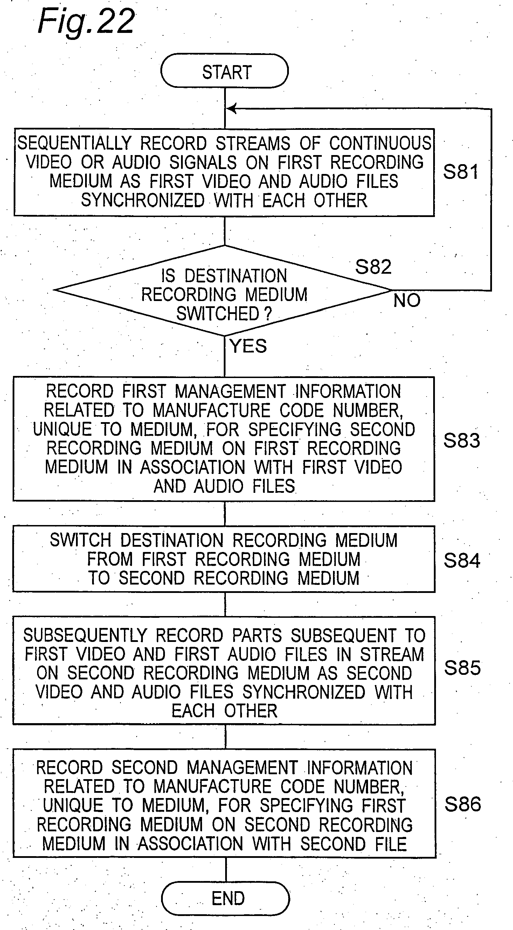

Furthermore, a method of sequentially, continuously recording streams of video signals and audio signals over a plurality of recording media in synchronism with each other will be described below with reference to FIG. 22. The recording method mentioned here includes the following steps.

(a) Streams of continuous video and audio signals are sequentially recorded on the first recording medium as a first video file and a first audio file synchronized with each other (S81).
(b) It is decided whether the destination recording medium is switched from the first recording medium to the second recording medium (S82). When the capacity of the recording buffer memory 108 is sufficiently large, recording on the second recording medium may be performed in parallel to recording on the first recording medium.
(c) First management information related to a manufacture code number, being unique to a medium, for specifying the second recording medium is recorded on the first recording medium in association with the first video and audio files (S83).
(d) The destination recording medium is switched from the first recording medium to the second recording medium (S84). As described above, when the recording on the second recording medium is performed in parallel to the recording on the first recording medium, step S84 is skipped.
(e) Parts subsequent to the first video file and the first audio file in the stream are sequentially recorded on the second recording medium as a second video file and a second audio file synchronized with each other (S85).
(f) Second management information related to a manufacture code number, being unique to a medium, for specifying the first recording medium is recorded on the second recording medium in association with the second video and audio files (S86).

(Embodiment 4)

In embodiment 4, a reproducing apparatus and a reproducing method which reproduce a recording memory on which data is recorded in Embodiment 1 will be described below. FIG. 1 is a block diagram showing the configuration of a video and audio recording/reproducing apparatus. The configuration of the reproducing apparatus is the same as that of the recording/reproducing apparatus according to Embodiment 1. The reproducing apparatus includes at least first and second drives. In the first and second drives, a first recording medium on which a first stream obtained by time-dividing a stream of continuous video or audio signals into first and second streams is recorded as a first file and a second recording medium on which the second stream is recorded as a second file are stored, respectively. The recording medium mentioned here is a recording memory. However, a recording medium except for the recording memory may be used. The reproducing apparatus includes a management information acquiring unit which acquires first management information related to files previous to and next to the first file from the first recording medium and second management information related to files previous to and next to the second file from the second recording medium. The management information acquiring unit is, for example, a recording memory processing unit 105. In this case, the management information file is an Index file. Furthermore, the reproducing apparatus includes a management information processing unit which forms an order of files continuing to constitute a series of streams on the basis of first management information and second management information. The management information processing unit is, for example, an Index file processing unit. The reproducing apparatus includes a display unit which displays a combination of continuous streams recorded on the recording media, an input unit which inputs selection of a stream to be reproduced from the combination of streams, and a reproducing unit which continuously reproduces the stream in the order of files according to the input operation to constitute the stream.
A reproducing method in the reproducing apparatus will be described below.

(a) In a reproducing operation, a system control unit 101 reads Index files recorded on recording memories 111 to 113 in advance, analyzes the contents of the Index files (S91), and forms an order of a series of video or audio files for each of continuous streams (materials). The details of the operation will be described later.
(b) The materials (streams) recorded on each recording medium is displayed, inputting of a stream to be reproduced is accepted (S92).
(c) When the selection and inputting of the material to be reproduced are accepted by an input unit 130, DIF format video files and Wave format audio files recorded on the recording memories 111 to 113 are read in the order of the above-mentioned files to constitute the material. The DIF format video file is decoded into video signals by a decoder 133, and the video signals are output from a video output unit 134. The Wave format audio file is output from an audio output unit 136 as audio signals.

The above procedure makes it possible to reproduce an AV file.

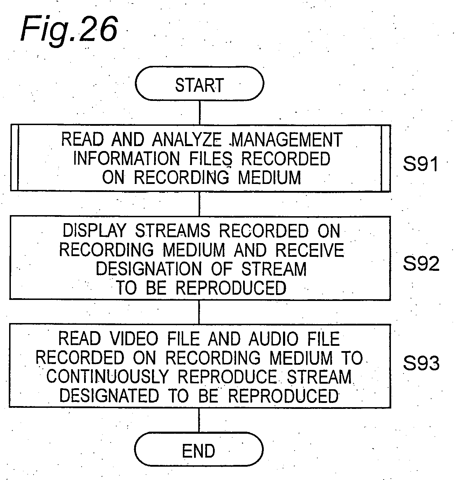

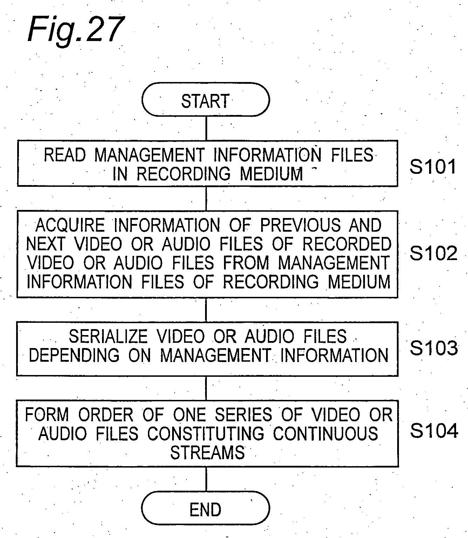

A reproducing method which performs reproducing from a plurality of recording memories on the basis of Index files will be further described in detail. This case shows reproducing of the three recording memories on which data are recorded in Embodiment 1. FIG. 27 is a flow chart for explaining step S91 in FIG. 26 in detail.

(a-1) Index files which are management information files recorded on the recording memories 111, 112, and 113 are read (S101).

(a-2) Pieces of information of video or audio files previous to and next to each of the video files or the audio files from the Index files in the recording memories 111, 112, and 113 are obtained (S102). In this case, one combination of video and audio files is used as one clip. FIG. 9 shows the contents of the recording memories 111, 112, and 113. The contents show the state in which data are recorded in Embodiment 1 The recording memory 111 is a Media ID M001 on which two clips, i.e., Clip ID C001 and Clip ID C002 are recorded. The recording memory 112 is a Media ID M002 on which one clip, i.e., Clip ID C001 is recorded. The recording memory 113 is a Media ID M003 on which one clip, i.e., Clip ID C001 is recorded. FIG. 10 shows the contents of the Index files of the recording memories 111 to 113. In this case; it is understood, by reading and analyzing the Index files of all the recording memories, that the following Clips are recorded.

Recording memory 111 (Media ID M001)
First clip Clip ID C001
Second clip Clip ID C002
Immediately next connection clip
Media ID M002 Clip ID C001
Recording memory 112 (Media ID M002)
First clip Clip ID C001
Immediately previous connection clip
Media ID M001 Clip ID C002
Immediately next connection clip
Media ID M003, Clip ID C001
Recording memory 113 (Media ID M003)
First clip Clip ID C001
Immediately previous connection clip
Media ID M002 Clip ID C001

(a-3) Video or audio files (clips) are serialized on the basis of the information shown in the Index files (S103).

(a-4) An order of a series of video or audio files constituting a series of continuous streams (materials) is formed (S104). In this manner, it is understood that the recording memories 111 to 113 include the following two recording materials (streams).
Material 1 recording memory 111 Clip ID C001
Material 2 material divided into three clips in
the following recording order
recording memory 111 Clip ID C002
recording memory 112 Clip ID C001
recording memory 113 Clip ID C001

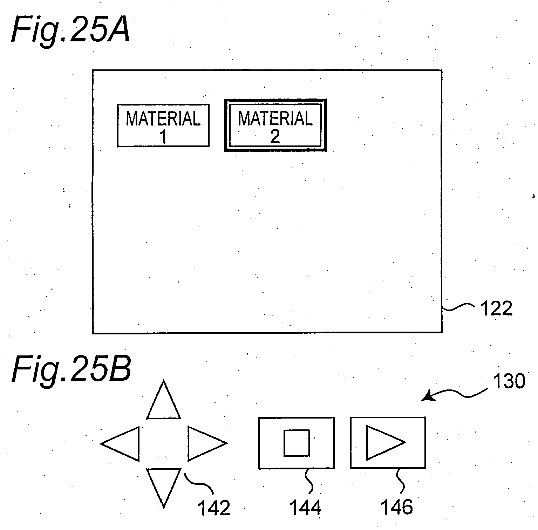

(b) As shown in FIG. 25A, it is shown to a user by the display unit 122 that the recording memories include the two materials described above. Selection by the user is accepted through the input unit 130 (S92). FIG. 25A shows a liquid crystal screen. The screen shows reduced images of the materials as icons. The reduced image is formed by decoding, for example, only a head frame of the material. FIG. 25B shows an example in which the input unit 130 is constituted by a cross-like key 142 and key switches 144 and 146. A user selects a material through the cross-like key 142 shown in FIG. 25B and depresses the reproducing button 146. The reproducing apparatus accepts the selection of a material to be reproduced.

(c) As shown in FIG. 25A, when material 2 is selected, clips are continuously reproduced in the following order (S93).
Recording memory 111 Clip ID C002
Recording memory 112 Clip ID C001
Recording memory 113 Clip ID C001

As described above, with reference to the Index files, even though a material is divided.into a plurality of clips in recording and then recorded, the material can be displayed to the user as one integrated material constituted by one series of continuous clips. Furthermore, since the clips can be continuously reproduced in accordance with the selection by the user in an order obtained by analyzing the material in advance, convenience for a user is improved.

(Embodiment 5)

A reproducing method according to Embodiment 5 is different from that of Embodiment 4 in that an order of a plurality of recording memories on which data are continuously recorded is changed. In the reproducing method, even though the positions of recording memories stored in recording are replaced with each other in reproducing, the data in the recording memories can be reproduced in the recording order. The configuration of a video and audio recording/reproducing apparatus is the same as that of Embodiment 4.

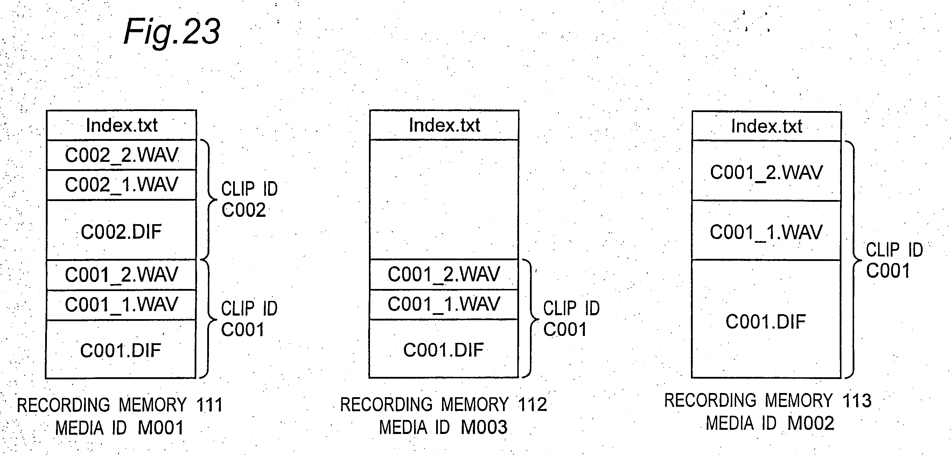

A reproducing method which performs reproducing from a plurality of recording memories on the basis of Index files will be further described below in detail. As shown in FIG. 23, a case where data in three recording memories the positions in recording of which are different from those in reproducing is reproduced will be shown.

(a-1) Index files which are management information files recorded on the recording memories 111, 112, and 113 are read (S101).

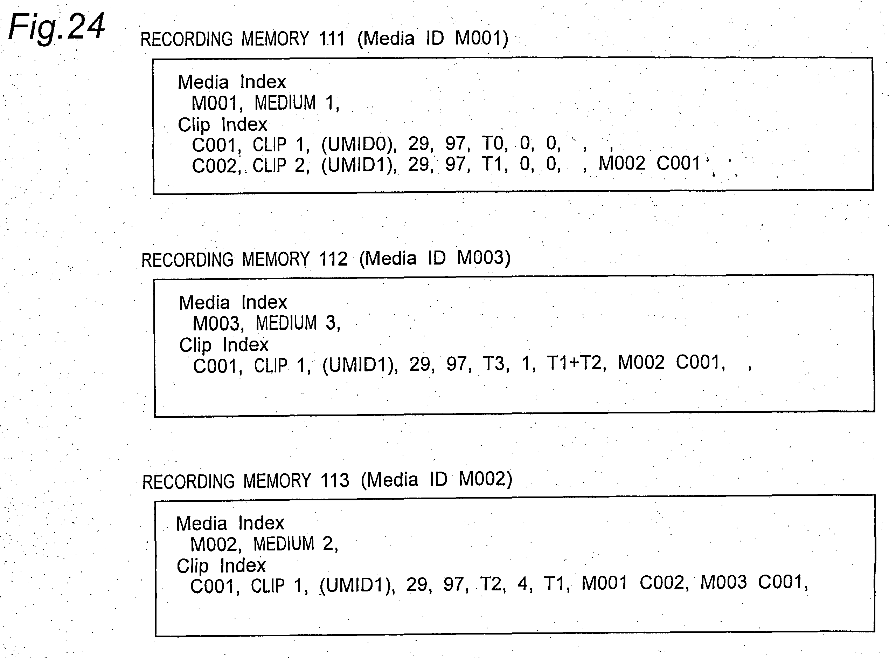

(a-2) Pieces of information of video or audio files previous to and next to each video or audio file from the index files of the recording memories 111, 112, and 113 are obtained (S102). FIG. 23 shows the contents of the recording memories 111 to 113. FIG. 23 shows a state in which the recording memories 112 and 113 are replaced with each other in the state in which data are recorded on the recording memories 111 to 113 in Embodiment 1 as shown in Fig. 9. The recording memory 111 is a Media ID M001 on which two clips, i.e., Clip ID C001 and Clip ID C002 are recorded. The recording memory 112 is a Media ID M003 on which one clip, i.e., Clip ID C001 is recorded. The recording memory 113 is a Media ID M002 on which one clip, i.e., Clip ID C001 is recorded. FIG. 24 shows the contents of the Index files in the recording memories 111 to 113. In this case, it is understood, by reading and analyzing the Index files of all the recording memories, that the following Clips are recorded:

Recording memory 111 (Media ID M001)
First clip Clip ID C001
Second clip Clip ID C002
Immediately next connection clip
Media ID M002 Clip ID C001
· Recording memory 112 (Media ID M003)
First clip Clip ID C001
immediately previous connection clip
Media ID M002, Clip ID C001
Recording memory 113 (Media ID M002)
First clip Clip ID C001
Immediately previous connection clip
Media ID M001 Clip ID C002
Immediately next connection clip
Media ID M003 Clip ID C001

(a-3) Video or audio files (or clips) are serialized on the basis of the information shown in the Index file (S103).

(a-4) An order of a series of video or audio files constituting a series of continuous streams (materials) is formed (S104). In this manner, it is understood that the recording memories 111 to 113 include the following two recording materials:

Material 1 Recording memory 111 Clip ID C002
Material 2 Material divided into three clips in
the following recording order:

1) Recording memory 111 Clip ID C002
2) Recording memory 113 Clip ID C001
3) Recording memory 112 Clip ID C001

(b) As shown in FIG. 25A, it is shown to a user by a display unit 122 that the recording memories 111 to 113 have the two materials described above, and selection by the user is accepted through an input unit 130 (S92). FIG. 25A shows a liquid crystal screen to display reduced images of the materials as icons. The reduced image is formed by decoding, e.g., only the head frame of the material. FIG. 25B shows an example in which the input unit 130 is constituted by a cross-like key 142 and key switches 144 and 146. A user selects a material through the cross-like key 142 and depresses the reproducing button 146. The reproducing apparatus accepts the selection of a material to be reproduced.

(c) As shown in FIG. 25A, when material 2 is selected, clips are continuously reproduced in the following order (S93).

Recording memory 111 Clip ID C002
Recording memory 113 Clip ID C001
Recording memory 112 Clip ID C001

As described above, with reference to information of Next Clip of the Clip Index of the Index file, media and clips immediately previous to and immediately next to a divided clip can be specified. For this reason, even though clips separately recorded on a plurality of memories are reproduced, the clips can be reproduced in the recording order even in a state in which loading positions of the plurality of recording memories in the reproducing are different from those in the recording.

A case in which a material constituted by continuous clips as described above is not selected, and one clip, e.g., a clip of Clip ID C002 in the recording memory 111 is selected and reproduced will be explained.

(a) In this case, the display unit 122 displays clips recorded on the recording memories 111, 112, and 113 without displaying a material, and selection by a user is accepted through the input unit 130.

(b) When selection of Clip ID C002 in the recording memory 111 to be reproduced is accepted, the Clip Index of the Index file in the recording memory 111 is referred to. In this manner, it is understood that the Next Clip of Clip ID C002, i.e., a clip to be continuously reproduced next is the clip of Clip ID C001 in the media of Media ID M002.

(c) Media Indexes of the Index files in all the recording memories are searched for Media ID M002. As a result of the searching, it is understood that the recording memory 113 is the media of Media ID M002. Furthermore, it is understood from the Clip Index that there is a clip of Clip ID C001, and the Next Clip of the clip is the clip of Clip ID C001 in the medium of Media ID M003.

(d) Similarly, with reference to the Index files, it is understood that, since the recording memory 113 includes Clip ID C001 of Media ID M003 and does not include a Next Clip, the clip is an end of the continuous clips.

(e) Therefore, it is understood that, when Clip ID C002 in the recording memory 111 is selected, the clips may be continuously reproduced in the following order:

Recording memory 111 Clip ID C002
Recording memory 113 Clip ID C001
Recording memory 112 Clip ID C001

As described above, with reference to information of Next Clip of the Clip Index of the Index file, clips immediately previous to and immediately next to a divided clip can be specified. For this reason, when clips separately recorded on a plurality of memories are selected and reproduced, the clips can be reproduced in the recording order even in a state in which loading positions of the plurality of recording memories in reproducing are different from those in the recording.

(Embodiment 6)

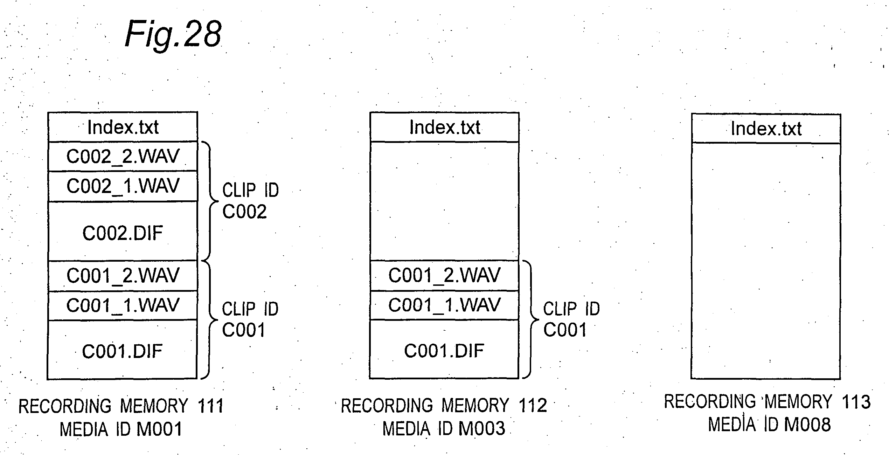

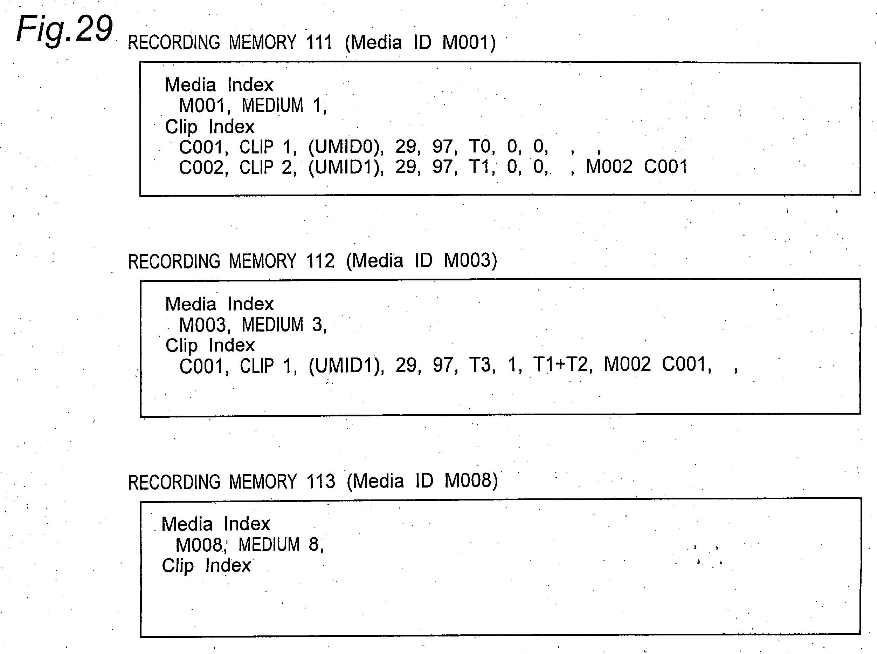

Embodiment 6 will explain a reproducing method to be applied to a case in which a stream is divided into a plurality of clips, the clips are separately recorded on a plurality of recording memories, and some of the recording memories stored in a reproducing apparatus is missing. FIG. 28 shows the contents of the recording memories 111 to 113. In comparison with the states of the recording memories according to Embodiment 4, the contents of only the recording memories 113 are different from each other, and the contents of the recording memories 111 and 112 are the same as those in Embodiment 4. The recording memory 113 is a media of Media ID M008 on which a clip is not recorded. FIG. 29 shows the contents of the Index files in the recording memories 111 to 113.

A reproducing method which performs reproducing on the basis of Index files from a plurality of recording memories will be further described in detail.

(a-1) Index files serving as management information files recorded on the recording memories 111, 112, and 113 are read (S101).

(a-2) Pieces of information of video or audio files previous to and next to the video or audio files from the Index files in the recording memories 111, 112, and 113 are obtained (S102). In this case, it is understood, by reading and analyzing the Index files in the all the recording memories, that the following Clips are recorded:

Recording memory 111 (media ID M001)
First clip Clip ID C001

Second clip Clip ID C002
Immediately next connection clip
Media ID M002 Clip ID C001
Recording memory 112 (media ID M003)
First clip Clip ID C001
Immediately previous connection clip
Media ID M002 Clip ID C001
Recording memory 113 (media ID-M008)
No clip

(a-3) The video or audio files (or clips) are serialized on the basis of the pieces of information shown in the Index files (S103).

(a-4) An order of a series of video or audio files constituting a series of continuous streams (materials) is formed (S104). In this manner, it is understood that the recording memories 111 to 113 include the following two recording materials:

Material 1 Recording memory 111 Clip ID C001

Material 2 Two clips in a material divided into three clips in the following recording order:

1) Recording memory 111 Clip ID C002
2) Unloaded
(Media ID M002 Clip ID C001)
3) Recording memory 112 Clip ID C001

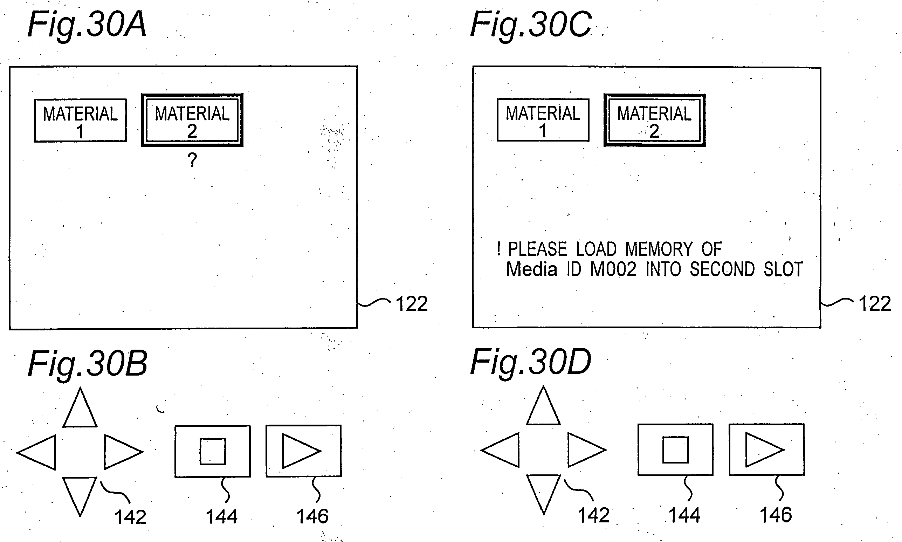

(b) As shown in FIG. 30A, it is shown to a user by a display unit 122 that the recording memories 111 to 113 have the two materials described above, and selection by the user is accepted through an input unit 130 (S92). FIGS. 30A and 30C show examples in which materials are shown by the display unit 122. FIGS. 30B and 30D show examples in which the input unit 130 is constituted by a cross-like key 142 and key switches 144 and 146. FIG. 30A shows a liquid crystal screen and displays reduced images of the materials as icons. FIG. 30A shows a liquid crystal screen to display reduced images of the materials as icons. The reduced image is formed by decoding, e.g., only the head frame of the material. In this case, since some clips in material 2 are not loaded, FIG. 30A shows that a mark "?" is added to material 2 to show that material 2 is in irregular state. The user selects a material through the cross-like key 142 and reproduces a clip selected by the reproducing button 146. As shown in FIG. 30A, it is understood that, when material 2 is selected and reproduced, some clips are not loaded, and the clips are recorded on the media of Media ID M002. For this reason, for example, as shown in FIG. 30B, "!Please load memory of Media ID M002 into the second slot" is displayed to give a warning against a user.

(c) As shown in FIG. 30A, when a clip of Clip ID C002 in the recording memory 111 is selected, the following operations will be performed.

(c-1) When the clip is selected, with reference to a Clip Index of the Index file in the recording memory 111, it is understood, from a Next Clip of Clip ID C002, that a clip to be continuously reproduced next is the clip of Clip ID C001 in the media of Media ID M002.

(c-2) Media Indexes of the Index files in all the recording memories are searched for Media ID M002. As a result of the searching, it is understood that there is no recording memory of the corresponding Media ID. More specifically, it is understood that the corresponding recording memory is not loaded on the reproducing apparatus.

(c-3) Therefore, the divided clips cannot be continuously reproduced. In this case, it is understood that a recording memory on which a missing clip is recorded is the recording memory of Media ID M002. For this reason, the reproducing apparatus can give a warning against a user.

(c-4) The warning against the user, as shown in FIG. 30C, for example, is displayed by the display unit 122 to make the user to load the recording memory of Media ID M002 into the apparatus.

In the above case, the Media ID is clearly written in a label or the like of the recording memory, so that a user can easily perform an operation to search for the corresponding recording memory. For example, when a serial number of a recording memory is used as a Media ID, a serial number is printed on a recording memory in manufacturing of the recording memory, so that a user can easily recognize the serial number. According to the above warning, the user can search for the desired recording memory and load the recording memory on the reproducing apparatus.

Furthermore, the above explanation shows an example in which a clip to be reproduced next is searched for by using a Next Clip. However, an immediately previous clip can be searched for by using a Previous Clip. For example, in FIG. 28, it is found from the content of the Index file in the recording memory 112 that a clip immediately previous to the clip of Clip ID C001 in the recording memory 112 is a clip of Clip ID C001 in the media of Media ID M002. As described above, a user can be designated to load a corresponding recording memory into the apparatus.

This embodiment describes a case in which an intermediate clip of divided clips is not loaded. Since clips previous to and next to the corresponding clip can be specified based on information of a Next Clip and a Previous Clip, when the head clip of the divided clips is lost, or when the end clip is lost, the Media ID of the lost recording memory can be specified.

Furthermore, even though the recording memory of Media ID M002 is not loaded, the clip of Clip ID C002 of Media ID M001 of the recording memory 111 and the clip of Clip ID C001 of Media ID M003 of the recording memory 113 can be independently reproduced. This is because information such as a corresponding video file and a corresponding audio file which are required to reproduce the clips can be obtained from the Clip IDs.

In this manner, with reference to information of a Next Clip and a Previous Clip of the Clip indexes of the Index files, media and clips immediately previous to and next to the divided clips can be specified. Even though some memory of the divided clips is not loaded, the corresponding memory can be easily specified. At the same time, even though some memory is not loaded, the loaded clip of the divided clips has information equivalent to a non-divided clip. For this reason, these clips can be reproduced.

Furthermore, even though a plurality of clips are lost, it can be easily determined that the previous and next clips are of the same material because the clips have the same UMID. For this reason, the divided clips can always be handled as the clips of the same material. In addition, it is apparent that, even though IDs to discriminate materials from each other are added in place of the UMIDs, the same effect as described above can be achieved.

In all the embodiments, the Index file includes a Media Index and a Clip Index. However, when a serial number is used as a Media ID, the unit 124 which detects a serial number is additionally arranged as shown in Fig 19 to make it possible to omit the Media ID. For example, when a predetermined command is given to a recording memory to cause a controller in the recording memory to output a serial number, the Media IDs can be omitted. In such a case, even though a dedicated command cannot be communicated to the recording memory through network connections or the like, by recording the Media ID in the Index file, the serial number can be easily detected from the Index file.

It is apparent that the same effect as described above can be achieved even though the Clip Index has a file configuration independent of the Index file in each clip.

As described above, the present invention is described in detail with reference to the preferred embodiments. However, the present invention is not limited to these embodiments, and it is apparent to persons skilled in the art that many preferable changes and modifications can be effected within the spirit and scope of the invention described on the following scope of claims.

**Claims**

1. A recording apparatus which time-divides a stream of continuous video or audio signals into a first stream and a second stream, records the first stream on a first recording medium as a first file, and records the second stream on a second recording medium as a second file, wherein
first management information related to the second file or the second recording medium is recorded on the first recording medium in association with the first file, or
second management information related to the first file or the first recording medium is recorded on the second recording medium in association with the second file.

2. A recording apparatus which time-divides a stream of continuous video signals and a stream of continuous audio signals into a first video stream and a first audio stream synchronized with each other and a second video stream and a second audio stream synchronized with each other; records the first video stream and the first audio stream on a first recording medium as a first video file and a first audio file, respectively, and records the second video stream and the second audio stream on a second recording medium as a second video file and a second audio file, respectively, wherein
first management information related to the second video file, the second audio file, or the second recording medium is recorded on the first recording medium in association with the first video file and the audio file, or
second management information related to the first video file, the first audio file, or the first recording medium is recorded on the second recording medium in association with the second video file and the second audio file.

3. The recording apparatus according to claim 2, wherein recording end time of the first video file and recording end time of the first audio file are caused to coincide with each other, and recording start time of the second video file and recording start time of the second audio file are caused to coincide with each other.

4. The recording apparatus according to claim 2 or 3, wherein, when a frame frequency of the video signals is different from a sample frequency of the audio signals, the video signals and the audio signals are synchronized with each other in association with audio signals the number of which is a predetermined number of samples every predetermined number of frames.

5. The recording apparatus according to any one of claims 1 to 4, wherein the first or second management information is written in a management information file.

6. The recording apparatus according to any one of claims 1 to 5, wherein the first management information related to the second recording medium or the second management information related to the first recording medium includes ID information which specifies a recording medium.

7. The recording apparatus according to claim 4, wherein a sequence number of a head frame of recording start of the first or second file is recorded on the first or second management information file.

8. The recording apparatus according to claim 2, wherein, when the video signals are MPEG-compressed video signals, increases in file size Dt of the first video file and the first audio file at the end of 2 continuous GOPs are predicated by the following equation at the start of each GOP, a recordable remaining capacity of the first recording medium is compared with the Dt, and it is determined that destination recording media are switched when the remaining capacity is smaller than the Dt:

$$Dt = (Da \times 2M) + ((Rmax/Fnum) \times 2M)$$

M: the number of frames of one GOP
Da: Audio data size in one frame unit
Rmax: maximum rate (Max rate) of MPEG in VBR
Fnum: frame frequency.

9. The recording apparatus according to claim 1, wherein, when the video signals are MPEG-compressed signals, the stream of the video signals is time-divided immediately before the head of a GOP.

10. A recording apparatus comprising:

stream dividing unit which time-divides a stream of continuous video or audio signals into a first stream and a second stream;
a first recording drive which stores a first recording medium therein to record the first stream on the first recording medium as a first file;
a second recording drive which stores a second recording medium therein to record the second stream on the second recording medium as a second file; and
a control unit which transmits first management information related to the second file or the second recording medium to the first recording drive to record the first management information on the first recording medium in association with the first file, or transmits second management information related to the first file or the first recording medium to the second recording drive to record the second management information on the second recording medium in association with the second file.

11. The recording apparatus according to any one of claims 1 to 10, wherein the first management information is related to a manufacture code number, being unique to a medium, for specifying the second recording medium, and the second management information is related to a manufacture code number, being unique to a medium, for specifying the first recording medium.

12. A recording method comprising:

time-dividing a stream of continuous video or audio signals into a first stream and a second stream;
recording the first stream on a first recording medium as a first file;
recording the second stream on a second recording medium as a second file; and
recording first management information related to the second file or the second recording medium on the first recording medium in association with the first file or recording second management information related to the first file or the first recording medium on the second recording medium in association with the second file.

**13.** The recording method comprising:

time-dividing a stream of continuous video signals and a stream of continuous audio signals into a first video stream and a first audio stream synchronized with each other and a second video stream and a second audio stream synchronized with each other;

recording the first video stream and the first audio stream on a first recording medium as a first video file and a first audio file, respectively;

recording the second video stream and the second audio stream on a second recording medium as a second video file and a first audio file, respectively; and

recording first management information related to second video file, the second audio file, or the second recording medium on the first recording medium in association with the first video file and the first audio file; or

recording second management information related to the first video file, the first audio file, or the first recording medium on the second recording medium in association with the second video file and the second audio file.

**14.** The recording method according to claim 13, wherein, when the video signals are MPEG-compressed video signals, increases in file size Dt of the first video file and the first audio file at the end of 2 continuous GOPs are predicated by the following equation at the start of each GOP, a recordable remaining capacity of the first recording medium is compared with the Dt, and it is determined that destination recording media are switched when the remaining capacity is smaller than the Dt:

$$Dt = (Da \times 2M) + ((Rmax/Fnum) \times 2M)$$

M: the number of frames of one GOP
Da: Audio data size in one frame unit
Rmax: maximum rate (Max rate) of MPEG in VBR
Fnum: frame frequency.

**15.** The recording method according to any one of claims 12 to 14, wherein the destination recording medium is switched from the first recording medium to the second recording medium.

**16.** A recording method comprising:

sequentially recording streams of continuous video or audio signals on a first recording medium as a first file;

sequentially recording parts subsequent to the first file in the streams on a second recording medium as a second file; and

recording first management information related to the second recording medium on the first recording medium in association with the first file.

**17.** The recording method according to claim 16, further comprising the step of recording second management information related to the first recording medium on the second recording medium in association with the second file.

**18.** A recording method comprising:

sequentially recording streams of continuous video or audio signals on a first recording medium as a first file;

sequentially recording parts subsequent to the first file in the streams on a second recording medium as a second file; and

recording second management information related to the first recording medium on the second recording medium in association with the second file.

**19.** The recording method according to any one of claims 16 to 18, further comprising:

deciding whether the destination recording medium is switched from the first recording medium to the second recording medium; and

switching the destination recording medium from the first recording medium to the second recording medium.

**20.** A recording method comprising:

sequentially recording streams of continuous video and audio signals on a first recording medium as a first video file and a first audio file synchronized with each other;

sequentially recording parts subsequent to the first video and audio files in the streams on a second recording medium as a second video file and a second audio file synchronized with each other; and

recording first management information which specifies the second recording medium on the first recording medium in association with the first video and audio files.

**21.** The recording method according to claim 20, further comprising the step of recording second management information which specifies the first recording medium on the second recording medium in association with the second video and audio files.

**22.** A recording method comprising:

sequentially recording streams of continuous video and audio signals on a first recording medium as a first video file and a first audio file synchronized with each other;

sequentially recording parts subsequent to the first video and audio files in the streams on a second recording medium as a second video file and a second audio file synchronized with each other; and

recording second management information which specifies the first recording medium on the second recording medium in association with the second video and audio files.

**23.** The recording method according to any one of claims 16 to 21, further comprising:

deciding whether the destination recording medium is switched from the first recording medium to the second recording medium; and

switching the destination recording medium from the first recording medium to the second recording medium.

**24.** The recording method according to any one of claims 12, 13, 15 to 21, and 23, wherein the first management information is related to a manufacture code number, being unique to a medium, for specifying the second recording medium.

**25.** The recording method according to any one of claims 12 to 16, 18, 19, and 21 to 23, wherein the second management information is related to a manufacture code number, being unique to a medium, for specifying the first recording medium.

**26.** A recording program which causes a computer to execute:

time-dividing a stream of continuous video or audio signals into a first stream and a second stream;

recording the first stream on a first recording medium as a first file;

recording the second stream on a second recording medium as a second file;

recording first management information related to the second file or the second recording medium on the first recording medium in association with the first file; and

recording second management information related to the first file or the first recording medium on the second recording medium in association with the second file.

**27.** A recording program according to claim 26 which causes a computer to further execute switching the destination recording medium from the first recording medium to the second recording medium.

**28.** A recording program which causes a computer to execute:

sequentially recording streams of continuous video or audio signals on a first recording medium as a first file;

sequentially recording parts subsequent to the first file in the streams on a second recording medium as a second file;

recording first management information related to the second file or the second recording medium on the first recording medium in association with the first file; and

recording second management information related to the first file or the first recording medium on the second recording medium in association with the second file.

**29.** The recording program according to claim 28 which causes a computer to further execute:

deciding whether the destination recording medium is switched from the first recording medium to the second recording medium; and

switching the destination recording medium from the first recording medium to the second recording medium.

**30.** The recording program according to any one of claims 26 to 29, wherein the first management information is related to a manufacture code number, being unique to a medium, for specifying the second recording medium, and the second management information is related to a manufacture code number, being unique to a medium, for specifying the first recording medium.

**31.** A computer readable recording medium on which the recording program according to any one of claims 26 to 30 is recorded.

**32.** A reproducing apparatus on which a plurality of recording media are loaded and which reproduces a plurality of video files or audio files recorded on the recording media, wherein
when a first video or audio file recorded on a first recording medium is to be reproduced, first management information related to a second video or audio file to be reproduced subsequently to the first video or audio file recorded on the first recording medium is read to specify a second recording medium on which the second video or audio file is recorded, and
subsequently to the first video or audio file, the second video or audio file is read from the second recording medium and continuously reproduced.

**33.** A reproducing apparatus on which a plurality of recording media are loaded and which reproduces a plurality of video files or audio files recorded on the recording media, wherein
when a first video or audio file recorded on a first recording medium is to be reproduced, first management information related to a second video or audio file to be reproduced subsequently to the first video or audio file recorded on the first recording medium is read to specify a second recording medium on which the second video or audio file is recorded, and
when the second recording medium is not loaded, first management information related to the second video or audio file is displayed.

**34.** A reproducing apparatus on which a plurality of recording media are loaded and which reproduces a plurality of video files or audio files recorded on the recording media, wherein
management information files recorded on the recording media are read and analyzed to form an order of video or audio files recorded on the recording media and constituting one series of continuous video or audio streams,
one series of continuous video or audio streams recorded on the recording media are displayed to accept a designation of a stream to be reproduced, and
the video or audio files are read from the recording media in the order of forming the video or audio streams and continuously reproduced depending on the accepted reproducing designation.

**35.** A reproducing apparatus comprising:

first and second drives in which a first recording medium on which a first stream obtained by time-dividing a stream of continuous video or audio signals into a first stream and a second stream is recorded as a first file and a second recording medium on which the second stream is recorded as a second file are stored;
management information acquiring unit which acquires first management information related to files previous to and next to the first file from the first recording medium, and acquires second management information related to files previous to or next to the second file from the second recording medium;
management information processing unit which forms an order of files which continue to constitute one series of streams on the basis of the first management information and the second management information;
display unit which displays a combination of continuous streams recorded on the recording media;
input unit which inputs selection of a stream to be reproduced from the combination of streams; and
reproducing unit which continuously reproduces the files in the order of the files to constitute the streams depending on the input.

**36.** A recording medium which is a first recording medium of a first recording medium on which a first file constituted by a first stream obtained by time-dividing a stream of continuous video or audio signals into a first stream and a second stream is recorded, and a second recording medium on which a second file constituted by the second stream is recorded, wherein
the first file and
first management information related to the second file the second recording medium are recorded, wherein the first management information is related to the first file.

37. The recording medium according to claim 36, wherein the first management information is related to a manufacture code number, being unique to a medium, for specifying the second recording medium.

38. A recording medium which is a second recording medium of a first recording medium on which a first file constituted by a first stream obtained by time-dividing a stream of continuous video or audio signals into a first stream and a second stream is recorded, and a second recording medium on which a second file constituted by the second stream is recorded, wherein
the second file and
second management information related to the first file or the first recording medium are recorded, wherein the second management information is related to the second file.

39. The recording medium according to claim 38, wherein the second management information is related to a manufacture code number, being unique to a medium, for specifying the first recording medium.

Fig.1

## Fig.2

(a) VIDEO FILE

DIF FORMAT FILE
(NTSC)

| ONE FRAME | | | ⌇ | |

←————→ 120000 Byte

N FRAMES
N×120000 Byte

(b) AUDIO FILE

WAVE FORMAT FILE

| RIFF | fmt | ID size | data |

←→ 8 Byte

M SAMPLES
RIFF+fmt+8+(M×2) Byte

EP 1 624 457 A1

EP 1 624 457 A1

## Fig.3

ONE FRAME

| | | | | | | | | |
|---|---|---|---|---|---|---|---|---|

VIDEO FILE

AUDIO FILE

CH1

CH2

| THE NUMBER OF SAMPLES | 1600 | 1602 | 1602 | 1602 | 1602 | 1600 | 1602 |
|---|---|---|---|---|---|---|---|
| SEQUENCE NO | 0 | 1 | 2 | 3 | 4 | 0 | 2 |

Fig.4

Fig.5

Media Index,
  Media 0001, ○ ○ ○ ○ ○ ○,
Clip Index,
  C001, ○ ○ ○ ○, × × × × ×, 30, 1000, ·········· , △ △ △ △ △
  C002, ○ ○ ○ ○, × × × × ×, 30, 2300, ·········· , △ △ △ △ △
  C003, ○ ○ ○ ○, × × × × ×, 30, 1500, ·········· , △ △ △ △ △
  C004, ○ ○ ○ ○, × × × × ×, 30, 500, ·········· , △ △ △ △ △

EP 1 624 457 A1

# Fig.6

(1) Media Index (FOR EACH MEDIUM)

| NAME | CONTENT |
|---|---|
| Media ID | ID UNIQUE TO EACH MEDIUM |
| Media Title | TITLE UNIQUE TO MEDIUM |

(2) Clip Index (FOR EACH Clip)

| NAME | CONTENT |
|---|---|
| Clip ID | ID UNIQUE TO EACH Clip |
| Clip Title | TITLE UNIQUE TO Clip |
| UMID | DESCRIBE UMID OF Clip |
| Frame Rate | FRAME RATE OF Video |
| Duration | Clip LENGTH (THE NUMBER OF FRAMES) |
| Sequence NO. | SEQUENCE NO. (0-4) |
| Offset | TIME FROM RECORDING START TO Clip HEAD (Frame LENGTH) |
| Previous Clip | MEDIA ID & Clip-ID OF Clip CONNECTED IMMEDIATELY PREVIOUS TO CORRESPONDING Clip |
| Next Clip | MEDIA ID & Clip-ID OF Clip CONNECTED IMMEDIATELY NEXT TO CORRESPONDING Clip |

EP 1 624 457 A1

## Fig.7

EP 1 624 457 A1

| Index.txt |
|-----------|
|           |
| C001_2.WAV |
| C001_1.WAV |
| C001.DIF |

Clip ID
C001

RECORDING MEMORY 111
Media ID M001

| Index.txt |
|-----------|
|           |

RECORDING MEMORY 112
Media ID M002

| Index.txt |
|-----------|
|           |

RECORDING MEMORY 113
Media ID M003

## Fig.8

Media ID M001
Clip ID C002

Media ID M002
Clip ID C003

Media ID M003
Clip ID C004

T1    T2    T3

VIDEO FILE — C002. DIF   C001. DIF   C001. DIF

ONE FRAME

AUDIO FILE
CH1 — C002_1. WAV   C001_1. WAV   C001_1. WAV

CH2 — C002_2. WAV   C001_2. WAV   C001_2. WAV

Sequence NO   0   1   3   4   0   4   0   1   2   2

EP 1 624 457 A1

## Fig.9

| Index.txt |
|---|
| C002_2.WAV |
| C002_1.WAV |
| C002.DIF |
| C001_2.WAV |
| C001_1.WAV |
| C001.DIF |

CLIP ID C002

CLIP ID C001

RECORDING MEMORY 111
MEDIA ID M001

| Index.txt |
|---|
| C001_2.WAV |
| C001_1.WAV |
| C001.DIF |

CLIP ID C001

RECORDING MEMORY 112
MEDIA ID M002

| Index.txt |
|---|
| |
| C001_2.WAV |
| C001_1.WAV |
| C001.DIF |

CLIP ID C001

RECORDING MEMORY 113
MEDIA ID M003

EP 1 624 457 A1

*Fig.10*

RECORDING MEMORY 111 (Media ID M001)

```
Media Index
  M001, MEDIUM 1,
Clip Index
  C001, CLIP 1, (UMID0), 29, 97, T0, 0, 0,  ,  ,
  C002, CLIP 2, (UMID1), 29, 97, T1, 0, 0,  , M002 C001
```

RECORDING MEMORY 112 (Media ID M002)

```
Media Index
  M002, MEDIUM 2,
Clip Index
  C001, CLIP 1, (UMID1), 29, 97, T2, 4, T1, M001 C002, M003 C001,
```

RECORDING MEMORY 113 (Media ID M003)

```
Media Index
  M003, MEDIUM 3,
Clip Index
  C001, CLIP 1, (UMID1), 29, 97, T3, 1, T1+T2, M002 C001,  ,
```

EP 1 624 457 A1

## Fig.11

REMAINING CAPACITY

Dt

MEMORY REMAINING
CAPACITY AT START
OF RECORDING

FILE SIZES OF
VIDEO FILE
AND AUDIO FILE

GOP GOP

T1

EP 1 624 457 A1

Fig.12

# Fig.13

```
                    ┌─────────────┐
                    │    START    │
                    └─────────────┘
                           │
    ┌──────────────────────────────────────────┐
    │ TIME-DIVIDE STREAM OF CONTINUOUS VIDEO    │   S01
    │     OR AUDIO SIGNALS INTO FIRST           │
    │          AND SECOND STREAMS               │
    └──────────────────────────────────────────┘
                           │
    ┌──────────────────────────────────────────┐
    │     RECORD FIRST STREAM ON FIRST          │   S02
    │    RECORDING MEDIUM AS FIRST FILE         │
    └──────────────────────────────────────────┘
                           │
    ┌──────────────────────────────────────────┐
    │ RECORD FIRST MANAGEMENT INFORMATION       │
    │ RELATED TO SECOND RECORDING MEDIUM ON     │   S03
    │ FIRST RECORDING MEDIUM IN ASSOCIATION     │
    │            WITH FIRST FILE                 │
    └──────────────────────────────────────────┘
                           │
    ┌──────────────────────────────────────────┐
    │ SWITCH DESTINATION RECORDING MEDIUM       │
    │ FROM FIRST RECORDING MEDIUM TO SECOND     │   S04
    │           RECORDING MEDIUM                │
    └──────────────────────────────────────────┘
                           │
    ┌──────────────────────────────────────────┐
    │   RECORD SECOND STREAM ON SECOND          │   S05
    │    RECORDING MEDIUM AS SECOND FILE        │
    └──────────────────────────────────────────┘
                           │
    ┌──────────────────────────────────────────┐
    │ RECORD SECOND MANAGEMENT INFORMATION      │
    │ RELATED TO FIRST RECORDING MEDIUM ON      │   S06
    │ SECOND RECORDING MEDIUM IN ASSOCIATION    │
    │           WITH SECOND FILE                │
    └──────────────────────────────────────────┘
                           │
                    ┌─────────────┐
                    │     END     │
                    └─────────────┘
```

35

# Fig.14

```
                    ┌─────────────┐
                    (   START     )
                    └─────────────┘
                           │
┌──────────────────────────────────────────┐
│  TIME-DIVIDE STREAMS OF CONTINUOUS VIDEO  │
│   AND AUDIO SIGNALS INTO FIRST VIDEO AND  │
│  AUDIO STREAMS SYNCHRONIZED WITH EACH     │  S11
│    OTHER AND SECOND VIDEO AND AUDIO       │
│  STREAMS SYNCHRONIZED WITH EACH OTHER     │
└──────────────────────────────────────────┘
                           │
┌──────────────────────────────────────────┐
│    RECORD FIRST VIDEO STREAM AND FIRST    │
│  AUDIO STREAM ON FIRST RECORDING MEDIUM   │  S12
│   AS FIRST VIDEO FILE AND FIRST AUDIO FILE │
└──────────────────────────────────────────┘
                           │
┌──────────────────────────────────────────┐
│    RECORD FIRST MANAGEMENT INFORMATION    │
│ RELATED TO SECOND RECORDING MEDIUM ON     │  S13
│  FIRST RECORDING MEDIUM IN ASSOCIATION    │
│     WITH FIRST VIDEO AND AUDIO FILES      │
└──────────────────────────────────────────┘
                           │
┌──────────────────────────────────────────┐
│   SWITCH DESTINATION RECORDING MEDIUM     │
│ FROM FIRST RECORDING MEDIUM TO SECOND     │  S14
│            RECORDING MEDIUM               │
└──────────────────────────────────────────┘
                           │
┌──────────────────────────────────────────┐
│      RECORD SECOND VIDEO STREAM AND       │
│       SECOND AUDIO STREAM ON SECOND       │  S15
│  RECORDING MEDIUM AS SECOND VIDEO FILE    │
│          AND SECOND AUDIO FILE            │
└──────────────────────────────────────────┘
                           │
┌──────────────────────────────────────────┐
│ RECORD SECOND MANAGEMENT INFORMATION      │
│   RELATED TO FIRST RECORDING MEDIUM ON    │  S16
│ SECOND RECORDING MEDIUM IN ASSOCIATION    │
│    WITH SECOND VIDEO AND AUDIO FILES      │
└──────────────────────────────────────────┘
                           │
                    ┌─────────────┐
                    (    END      )
                    └─────────────┘
```

## Fig.15

```
                    ( START )
                        │
                        ▼◄─────────────────┐
        ┌───────────────────────────────────┐        │
        │  SEQUENTIALLY RECORD STREAMS OF    │        │
        │  CONTINUOUS VIDEO OR AUDIO SIGNALS ON │  S21  │
        │  FIRST RECORDING MEDIUM AS FIRST FILE │        │
        └───────────────────────────────────┘        │
                        │                             │
                        ▼                             │
                  ╱───────────╲   S22                 │
            ╱─────────────────────────╲               │
          ╱   IS DESTINATION            ╲             │
         ╱  RECORDING MEDIUM SWITCHED    ╲────────────┘
          ╲            ?                 ╱   NO
            ╲─────────────────────────╱
                  ╲───────────╱
                        │ YES
                        ▼
        ┌───────────────────────────────────┐
        │  RECORD FIRST MANAGEMENT INFORMATION │
        │  RELATED TO SECOND RECORDING MEDIUM ON │  S23
        │  FIRST RECORDING MEDIUM IN ASSOCIATION │
        │          WITH FIRST FILE             │
        └───────────────────────────────────┘
                        │
                        ▼
        ┌───────────────────────────────────┐
        │  SWITCH DESTINATION RECORDING MEDIUM │
        │  FROM FIRST RECORDING MEDIUM TO SECOND │  S24
        │          RECORDING MEDIUM            │
        └───────────────────────────────────┘
                        │
                        ▼
        ┌───────────────────────────────────┐
        │  SUBSEQUENTLY RECORD PARTS SUBSEQUENT TO │
        │  FIRST FILE IN STREAM ON SECOND RECORDING │  S25
        │          MEDIUM AS SECOND FILE       │
        └───────────────────────────────────┘
                        │
                        ▼
        ┌───────────────────────────────────┐
        │  RECORD SECOND MANAGEMENT INFORMATION │
        │  RELATED TO FIRST RECORDING MEDIUM ON │  S26
        │  SECOND RECORDING MEDIUM IN ASSOCIATION │
        │          WITH SECOND FILE            │
        └───────────────────────────────────┘
                        │
                        ▼
                    (  END  )
```

# Fig.16

START

SEQUENTIALLY RECORD STREAMS OF
CONTINUOUS VIDEO OR AUDIO SIGNALS ON
FIRST RECORDING MEDIUM AS FIRST VIDEO AND
AUDIO FILES SYNCHRONIZED WITH EACH OTHER — S31

IS DESTINATION
RECORDING MEDIUM
SWITCHED ? — S32

NO

YES

RECORD FIRST MANAGEMENT INFORMATION
RELATED TO SECOND RECORDING MEDIUM
ON FIRST RECORDING MEDIUM IN ASSOCIATION
WITH FIRST VIDEO AND AUDIO FILES — S33

SWITCH DESTINATION RECORDING MEDIUM
FROM FIRST RECORDING MEDIUM TO
SECOND RECORDING MEDIUM — S34

SUBSEQUENTLY RECORD PARTS SUBSEQUENT
TO FIRST VIDEO AND FIRST AUDIO FILES IN
STREAM ON SECOND RECORDING MEDIUM AS
SECOND VIDEO AND AUDIO FILES
SYNCHRONIZED WITH EACH OTHER — S35

RECORD SECOND MANAGEMENT INFORMATION
RELATED TO FIRST RECORDING MEDIUM
ON SECOND RECORDING MEDIUM IN
ASSOCIATION WITH SECOND FILE — S36

END

## Fig.17

```
        ┌─────────────┐
        │    START    │
        └─────────────┘
               │
   ┌──────────────────────────────┐
   │ WITH RESPECT TO MPEG-COMPRESSED │
   │ VIDEO SIGNAL, AT START OF EACH GOP, │  S41
   │ PREDICT INCREASES IN FILE SIZES Dt OF │
   │ FIRST VIDEO AND AUDIO FILES │
   │ AT END OF 2 CONTINUOUS GOPs │
   └──────────────────────────────┘
               │
```

COMPARE RECORDABLE REMAINING CAPACITY OF FIRST RECORDING MEDIUM WITH INCREASE Dt    S42

REMAINING CAPACITY $\geqq$ Dt

REMAINING CAPACITY $<$ Dt

S43

SWITCH DESTINATION RECORDING MEDIUM TO SECOND RECORDING MEDIUM

S44

DO NOT SWITCH DESTINATION RECORDING MEDIUM

## Fig.18

VIDEO FILE PROCESSING UNIT — 102

AUDIO FILE PROCESSING UNIT — 103

Index FILE PROCESSING UNIT — 104

RECORDING MEMORY PROCESSING UNIT — 105

FILE SYSTEM — 106

MEMORY FOR FILE SYSTEM — 107

RECORDING BUFFER MEMORY — 108

REPRODUCING BUFFER MEMORY — 109

101

100a

RECORDING MEMORY 111 — CONTROL MEMORY

RECORDING MEMORY 112 — CONTROL MEMORY

RECORDING MEMORY 113 — CONTROL MEMORY — 114

RECORDING MEMORY I/F — 110

124

120 — I/O BUS

INPUT UNIT — 130

ENCODER — 131

DECODER — 133

AUDIO INPUT UNIT — 135

AUDIO OUTPUT UNIT — 136

DISPLAY UNIT — 122

VIDEO INPUT UNIT — 132

VIDEO OUTPUT UNIT — 134

EP 1 624 457 A1

# Fig.19

```
                    ┌──────────────┐
                    (    START     )
                    └──────┬───────┘
        ┌──────────────────────────────────┐
        │   TIME-DIVIDE STREAM OF CONTINUOUS │
        │   VIDEO OR AUDIO SIGNALS INTO FIRST │   S51
        │      AND AUDIO SECOND STREAMS      │
        └──────────────────┬─────────────────┘
        ┌──────────────────────────────────┐
        │   RECORD FIRST STREAM ON FIRST    │   S52
        │   RECORDING MEDIUM AS FIRST FILE  │
        └──────────────────┬─────────────────┘
        ┌──────────────────────────────────┐
        │ RECORD FIRST MANAGEMENT INFORMATION │
        │  RELATED TO MANUFACTURE CODE NUMBER,│
        │ UNIQUE TO MEDIUM, FOR SPECIFYING SECOND│ S53
        │  RECORDING MEDIUM ON FIRST RECORDING │
        │  MEDIUM IN ASSOCIATION WITH FIRST FILE│
        └──────────────────┬─────────────────┘
        ┌──────────────────────────────────┐
        │ SWITCH DESTINATION RECORDING MEDIUM │
        │   FROM FIRST RECORDING MEDIUM TO   │   S54
        │     SECOND RECORDING MEDIUM        │
        └──────────────────┬─────────────────┘
        ┌──────────────────────────────────┐
        │   RECORD SECOND STREAM ON SECOND  │   S55
        │  RECORDING MEDIUM AS SECOND FILE  │
        └──────────────────┬─────────────────┘
        ┌──────────────────────────────────┐
        │ RECORD SECOND MANAGEMENT INFORMATION│
        │  RELATED TO MANUFACTURE CODE NUMBER,│
        │  UNIQUE TO MEDIUM, FOR SPECIFYING FIRST│ S56
        │ RECORDING MEDIUM ON SECOND RECORDING│
        │ MEDIUM IN ASSOCIATION WITH SECOND FILE│
        └──────────────────┬─────────────────┘
                    ┌──────────────┐
                    (     END      )
                    └──────────────┘
```

# Fig.20

```
                    ┌─────────────┐
                    │    START    │
                    └─────────────┘
                           │
┌──────────────────────────────────────────┐
│ TIME-DIVIDE STREAMS OF CONTINUOUS VIDEO AND│
│    AUDIO SIGNALS INTO FIRST VIDEO AND AUDIO │  S61
│ STREAMS SYNCHRONIZED WITH EACH OTHER AND    │
│       SECOND VIDEO AND AUDIO STREAMS        │
│         SYNCHRONIZED WITH EACH OTHER        │
└──────────────────────────────────────────┘
                           │
┌──────────────────────────────────────────┐
│   RECORD FIRST VIDEO STREAM AND FIRST AUDIO │
│    STREAM ON FIRST RECORDING MEDIUM AS      │  S62
│     FIRST VIDEO FILE AND FIRST AUDIO FILE   │
└──────────────────────────────────────────┘
                           │
┌──────────────────────────────────────────┐
│RECORD FIRST MANAGEMENT INFORMATION RELATED  │
│   TO MANUFACTURE CODE NUMBER, UNIQUE TO     │
│  MEDIUM, FOR SPECIFYING SECOND RECORDING    │  S63
│    MEDIUM ON FIRST RECORDING MEDIUM IN      │
│ ASSOCIATION WITH FIRST VIDEO AND AUDIO FILES│
└──────────────────────────────────────────┘
                           │
┌──────────────────────────────────────────┐
│    SWITCH DESTINATION RECORDING MEDIUM      │
│      FROM FIRST RECORDING MEDIUM TO         │  S64
│          SECOND RECORDING MEDIUM            │
└──────────────────────────────────────────┘
                           │
┌──────────────────────────────────────────┐
│    RECORD SECOND VIDEO STREAM AND SECOND    │
│ AUDIO STREAM ON SECOND RECORDING MEDIUM AS  │  S65
│  SECOND VIDEO FILE AND SECOND AUDIO FILE    │
└──────────────────────────────────────────┘
                           │
┌──────────────────────────────────────────┐
│   RECORD SECOND MANAGEMENT INFORMATION      │
│ RELATED TO MANUFACTURE CODE NUMBER, UNIQUE  │
│  TO MEDIUM, FOR SPECIFYING FIRST RECORDING  │  S66
│   MEDIUM ON SECOND RECORDING MEDIUM IN      │
│ ASSOCIATION WITH SECOND VIDEO AND AUDIO FILES│
└──────────────────────────────────────────┘
                           │
                    ┌─────────────┐
                    │     END     │
                    └─────────────┘
```

# Fig.21

START

SEQUENTIALLY RECORD STREAMS OF CONTINUOUS VIDEO OR AUDIO SIGNALS ON FIRST RECORDING MEDIUM AS FIRST FILE   S71

IS DESTINATION RECORDING MEDIUM SWITCHED ?   S72

NO

YES

RECORD FIRST MANAGEMENT INFORMATION RELATED TO MANUFACTURE CODE NUMBER, UNIQUE TO MEDIUM, FOR SPECIFYING SECOND RECORDING MEDIUM ON FIRST RECORDING MEDIUM IN ASSOCIATION WITH FIRST FILE   S73

SWITCH DESTINATION RECORDING MEDIUM FROM FIRST RECORDING MEDIUM TO SECOND RECORDING MEDIUM   S74

SUBSEQUENTLY RECORD PARTS SUBSEQUENT TO FIRST FILE IN STREAM ON SECOND RECORDING MEDIUM AS SECOND FILE   S75

RECORD SECOND MANAGEMENT INFORMATION RELATED TO MANUFACTURE CODE NUMBER, UNIQUE TO MEDIUM, FOR SPECIFYING FIRST RECORDING MEDIUM ON SECOND RECORDING MEDIUM IN ASSOCIATION WITH SECOND FILE   S76

END

## Fig.22

```
                    ┌─────────────┐
                    │    START    │
                    └──────┬──────┘
                           │ ◄──────────────────────────┐
  ┌────────────────────────────────────────────┐        │
  │SEQUENTIALLY RECORD STREAMS OF CONTINUOUS    │        │
  │VIDEO OR AUDIO SIGNALS ON FIRST RECORDING     │  S81   │
  │  MEDIUM AS FIRST VIDEO AND AUDIO FILES       │        │
  │     SYNCHRONIZED WITH EACH OTHER             │        │
  └────────────────────┬───────────────────────┘        │
                       │                                 │
                   ╱───┴───╲          S82                │
              ╱──────────────────╲                       │
          ╱    IS DESTINATION       ╲                    │
         ╱    RECORDING MEDIUM        ╲───────────────────┘
          ╲      SWITCHED ?          ╱    NO
              ╲──────────────────╱
                   ╲───┬───╱
                      YES
  ┌────────────────────────────────────────────┐
  │   RECORD FIRST MANAGEMENT INFORMATION        │
  │   RELATED TO MANUFACTURE CODE NUMBER,        │
  │ UNIQUE TO MEDIUM, FOR SPECIFYING SECOND      │  S83
  │  RECORDING MEDIUM ON FIRST RECORDING         │
  │ MEDIUM IN ASSOCIATION WITH FIRST VIDEO       │
  │            AND AUDIO FILES                   │
  └────────────────────┬───────────────────────┘
  ┌────────────────────────────────────────────┐
  │  SWITCH DESTINATION RECORDING MEDIUM         │
  │     FROM FIRST RECORDING MEDIUM              │  S84
  │     TO SECOND RECORDING MEDIUM               │
  └────────────────────┬───────────────────────┘
  ┌────────────────────────────────────────────┐
  │ SUBSEQUENTLY RECORD PARTS SUBSEQUENT TO      │
  │ FIRST VIDEO AND FIRST AUDIO FILES IN STREAM  │
  │ ON SECOND RECORDING MEDIUM AS SECOND         │  S85
  │ VIDEO AND AUDIO FILES SYNCHRONIZED WITH      │
  │            EACH OTHER                        │
  └────────────────────┬───────────────────────┘
  ┌────────────────────────────────────────────┐
  │ RECORD SECOND MANAGEMENT INFORMATION         │
  │   RELATED TO MANUFACTURE CODE NUMBER,        │
  │  UNIQUE TO MEDIUM, FOR SPECIFYING FIRST      │  S86
  │ RECORDING MEDIUM ON SECOND RECORDING         │
  │ MEDIUM IN ASSOCIATION WITH SECOND FILE       │
  └────────────────────┬───────────────────────┘
                    ┌──────┴──────┐
                    │     END     │
                    └─────────────┘
```

# Fig.23

| Index.txt |
|---|
| C002_2.WAV |
| C002_1.WAV |
| C002.DIF |
| C001_2.WAV |
| C001_1.WAV |
| C001.DIF |

CLIP ID C002

CLIP ID C001

RECORDING MEMORY 111
MEDIA ID M001

| Index.txt |
|---|
| |
| |
| C001_2.WAV |
| C001_1.WAV |
| C001.DIF |

CLIP ID C001

RECORDING MEMORY 112
MEDIA ID M003

| Index.txt |
|---|
| C001_2.WAV |
| C001_1.WAV |
| C001.DIF |

CLIP ID C001

RECORDING MEMORY 113
MEDIA ID M002

*Fig.24*

RECORDING MEMORY 111 (Media ID M001)

Media Index
  M001, MEDIUM 1,
Clip Index
  C001, CLIP 1, (UMID0), 29, 97, T0, 0, 0,   ,   ,
  C002, CLIP 2, (UMID1), 29, 97, T1, 0, 0,   , M002 C001

RECORDING MEMORY 112 (Media ID M003)

Media Index
  M003, MEDIUM 3,
Clip Index
  C001, CLIP 1, (UMID1), 29, 97, T3, 1, T1+T2, M002 C001,   ,

RECORDING MEMORY 113 (Media ID M002)

Media Index
  M002, MEDIUM 2,
Clip Index
  C001, CLIP 1, (UMID1), 29, 97, T2, 4, T1, M001 C002, M003 C001,

EP 1 624 457 A1

EP 1 624 457 A1

*Fig.25A*

MATERIAL
1

MATERIAL
2

~ 122

*Fig.25B*

130

142    144    146

# Fig.26

```
                    ┌─────────────┐
                    │    START    │
                    └─────────────┘
                           │
    ╔══════════════════════════════════════╗
    ║   READ AND ANALYZE MANAGEMENT         ║
    ║   INFORMATION FILES RECORDED          ║      S91
    ║   ON RECORDING MEDIUM                 ║
    ╚══════════════════════════════════════╝
                           │
    ┌──────────────────────────────────────┐
    │   DISPLAY STREAMS RECORDED ON         │
    │   RECORDING MEDIUM AND RECEIVE        │
    │   DESIGNATION OF STREAM               │      S92
    │   TO BE REPRODUCED                    │
    └──────────────────────────────────────┘
                           │
    ┌──────────────────────────────────────┐
    │   READ VIDEO FILE AND AUDIO FILE      │
    │   RECORDED ON RECORDING MEDIUM TO     │      S93
    │   CONTINUOUSLY REPRODUCE STREAM       │
    │   DESIGNATED TO BE REPRODUCED         │
    └──────────────────────────────────────┘
                           │
                    ┌─────────────┐
                    │     END     │
                    └─────────────┘
```

# Fig.27

```
        ┌─────────────┐
        │    START    │
        └─────────────┘
               │
┌─────────────────────────────────┐
│  READ MANAGEMENT INFORMATION FILES │   S101
│       IN RECORDING MEDIUM         │
└─────────────────────────────────┘
               │
┌─────────────────────────────────┐
│  ACQUIRE INFORMATION OF PREVIOUS AND │
│  NEXT VIDEO OR AUDIO FILES OF RECORDED │   S102
│  VIDEO OR AUDIO FILES FROM MANAGEMENT │
│  INFORMATION FILES OF RECORDING MEDIUM │
└─────────────────────────────────┘
               │
┌─────────────────────────────────┐
│       SERIALIZE VIDEO OR AUDIO FILES │   S103
│  DEPENDING ON MANAGEMENT INFORMATION │
└─────────────────────────────────┘
               │
┌─────────────────────────────────┐
│  FORM ORDER OF ONE SERIES OF VIDEO OR │
│  AUDIO FILES CONSTITUTING CONTINUOUS │   S104
│              STREAMS              │
└─────────────────────────────────┘
               │
        ┌─────────────┐
        │     END     │
        └─────────────┘
```

Fig.28

RECORDING MEMORY 111
MEDIA ID M001

Index.txt

CLIP ID C002
C002_2.WAV
C002_1.WAV
C002.DIF

CLIP ID C001
C001_2.WAV
C001_1.WAV
C001.DIF

RECORDING MEMORY 112
MEDIA ID M003

Index.txt

CLIP ID C001
C001_2.WAV
C001_1.WAV
C001.DIF

RECORDING MEMORY 113
MEDIA ID M008

Index.txt

*Fig.29*  RECORDING MEMORY 111 (Media ID M001)

```
Media Index
  M001, MEDIUM 1,
Clip Index
  C001, CLIP 1, (UMID0), 29, 97, T0, 0, 0,  ,  ,
  C002, CLIP 2, (UMID1), 29, 97, T1, 0, 0,  , M002 C001
```

RECORDING MEMORY 112 (Media ID M003)

```
Media Index
  M003, MEDIUM 3,
Clip Index
  C001, CLIP 1, (UMID1), 29, 97, T3, 1, T1+T2, M002 C001,  ,
```

RECORDING MEMORY 113 (Media ID M008)

```
Media Index
  M008, MEDIUM 8,
Clip Index
```

EP 1 624 457 A1

## Fig.30A

MATERIAL
1

MATERIAL
2

?

~122

## Fig.30B

142    144    146

## Fig.30C

MATERIAL
1

MATERIAL
2

! PLEASE LOAD MEMORY OF
Media ID M002 INTO SECOND SLOT

~122

## Fig.30D

142    144    146

## INTERNATIONAL SEARCH REPORT

| International application No. |
|---|
| PCT/JP2004/006290 |

**A. CLASSIFICATION OF SUBJECT MATTER**
Int.Cl⁷ G11B27/00, G11B20/12, H04N5/91

According to International Patent Classification (IPC) or to both national classification and IPC

**B. FIELDS SEARCHED**

Minimum documentation searched (classification system followed by classification symbols)
Int.Cl⁷ G11B27/00-27/06, G11B20/12, H04N5/91

Documentation searched other than minimum documentation to the extent that such documents are included in the fields searched
Jitsuyo Shinan Koho          1922-1996   Jitsuyo Shinan Toroku Koho   1996-2004
Kokai Jitsuyo Shinan Koho    1971-2004   Toroku Jitsuyo Shinan Koho   1994-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br><br>Y | JP 2000-182358 A  (Sanyo Electric Co., Ltd.),<br>30 June, 2000 (30.06.00),<br>Par. Nos. [0002] to [0014], [0020] to [0045];<br>Figs. 1 to 7<br>(Family: none) | 1-2,5-6,<br>12-13,15-23,<br>26-29,31-34,<br>36,38<br>3-4,7-11,14,<br>24-25,30,35,<br>37,39 |
| Y | JP 2002-10203 A  (Sharp Corp.),<br>11 January, 2002 (11.01.02),<br>Par. Nos. [0026] to [0037]; Figs. 3 to 4<br>(Family: none) | 3-4,7 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>04 June, 2004 (04.06.04) | Date of mailing of the international search report<br>22 June, 2004 (22.06.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/006290 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2001-275083 A (Sony Corp.),<br>05 October, 2001 (05.10.01),<br>Par. Nos. [0175] to [0176]<br>& US 2002/0012522 A1    & DE 10115084 A1 | 7 |
| Y | JP 2000-228081 A (Sharp Corp.),<br>15 August, 2000 (15.08.00),<br>Par. Nos. [0037] to [0039]<br>(Family: none) | 8,14 |
| Y | JP 11-38954 A (Sanyo Electric Co., Ltd.,<br>Dynaware Corp.),<br>12 February, 1999 (12.02.99),<br>Par. Nos. [0036] to [0037]; Fig. 5<br>(Family: none) | 9 |
| Y | JP 11-353856 A (Nippon Columbia Co., Ltd.),<br>24 December, 1999 (24.12.99),<br>Par. No. [0016]; Fig. 2<br>& EP 0962927 A2      & US 6373798 B1 | 10,35 |
| Y | JP 2002-334511 A (Sony Computer Entertainment<br>Inc.),<br>22 November, 2002 (22.11.02),<br>Par. Nos. [0088] to [0089]<br>& EP 1274000 A1      & US 2002/0129262 A1 | 11,24-25,30,<br>37,39 |
| A | JP 9-102185 A (Nippon Columbia Co., Ltd.),<br>15 April, 1997 (15.04.97),<br>Full text; all drawings<br>& US 5731923 A | 1-39 |

Form PCT/ISA/210 (continuation of second sheet) (January 2004)